# EUROPEAN PATENT SPECIFICATION

(11) **EP 2 267 318 B1**
(45) Date of publication and mention of the grant of the patent: **09.09.2015**
(21) Application number: 09731246.6
(22) Date of filing: 09.04.2009
(51) Int. Cl.: F16B 1/02, B60R 19/24, F16B 21/04, F16B 2/18

(54) **ARTICLE FIXING DEVICE**
ARTIKELFIXIERVORRICHTUNG
DISPOSITIF DE FIXATION D'UN ARTICLE

(30) Priority: 10.04.2008 JP 2008102927; 27.02.2009 JP 2009046830
(43) Date of publication of application: 29.12.2010
(73) Proprietor: Nifco Inc., Yokohama-shi, Kanagawa 244-8522 (JP)
(72) Inventor: SHIOMOTO, Tadahide, Yokohama-shi Kanagawa 244-8522 (JP); YAMAMOTO, Hiroyuki, Yokohama-shi Kanagawa 244-8522 (JP)
(74) Representative: Gassner, Wolfgang
(86) International application number: PCT/JP2009/057285
(87) International publication number: WO 2009/125818

(56) References cited:
- DE-A1- 3 611 714
- DE-A1- 19 951 472
- FR-A5- 2 199 363
- JP-A- 10 059 097
- JP-A- 2002 308 150
- JP-U- 3 097 989

## Description

### Technological Field

This invention relates to an article fixing device, for example, a bumper retainer, for fixing an automobile bumper as an article on a body panel as an installation panel, and the article fixing device is made such that not only the fastening device is inserted through a connect-through hole on a fixing device body into a pass-through hole on the installation panel, whereby the article can be provisionally installed on the installation panel, but also, engaging sections are drawn inward by a rotation of a lever, whereby the engaging sections can be made to adhere closely to the rear surface of the installation panel, and the article can be fixed on the installation panel without rattling.

### Background Technology

Conventionally, a storage recess for storing a spare tire is provided inside the rear trunk of an automobile, and a fastening device for fixing a cover body over the opening of the storage recess is known (for example, see Patent Document 1, page 3, upper left block, line 19 to same page, upper right block, line 4, and FIG. 2).

The abovementioned conventional fastening device has a retaining slot for receiving a boss that projects laterally from an inner side surface of the opening of the storage recess, and is rotated so as to be turned down into a hollow part of the cover body when in a condition in which the boss was received into the retaining slot, whereby and the cover body is fixed over the opening of the storage recess (for example, see Patent Document 1, page 3 lower right block, line 3, to page 4 lower right block, line 12, and FIGS. 4 to 6).

Patent documents 2 and 3 disclose an article fixing device for fixing an article to an installation panel, comprising: A fixing device body having a connect-through hole passing into a pass-through hole connecting front and rear surfaces of said installation panel; a fastening device inserted through said connect-through hole of said fixing device body into said pass-through hole of said installation panel; wherein said fixing device body comprises a contact surface extending outwardly from an inner diameter of said pass-through hole and contacting with a front surface of said installation panel; and wherein said fastening device comprises at least one pair of engaging sections, said engaging sections, in a state in which each fastening device passes through said connect-through hole and said pass-through hole, facing each other away from the rear surface of said installation panel, being larger than an inner diameter of the pass-through hole, and projecting outwards; and a lever being held rotatably by said fastening device, and moving said fastening device in a direction retracting from said pass-through hole by rotation thereof, the lever fixing said engaging section to said rear surface of said installation panel.

Document 4 discloses an expansion anchor being connected with an eccentric lever by the rotation of which a fixing distance between the expansion anchor and the lever can be varied.

### Prior art documents

### Patent documents

Patent document 1: Publication of Japanese Unexamined Patent No. H02-152671
Patent document 2: DE 36 11 714 A1
Patent document 3: FR 2 199 363 A5
Patent document 4: DE 199 51 472 A1

### Summary of the Invention

### Problem to be Solved by the Invention

However, the abovementioned conventional fastening device has a problem that the boss must be fixed in advance to the inner side surface of the storage recess.

Therefore, the present invention has been made in consideration of the problem of the aforementioned conventional technology, and an aim thereof is to make the article fixing device such that not only is a fastening device inserted through a connect-through hole on a fixing device body into a pass-through hole on an installation panel, whereby an article can be provisionally installed on the installation panel, but also, engaging sections are drawn inward by rotation of a lever, whereby the engaging sections can be made to adhere closely to the rear surface of the installation panel, and the article can be fixed on the installation panel without rattling.

### Means for Solving the Problem

The present invention has been made in order to achieve the abovementioned aim and is defined by the features of claims 1 to 9. The invention is in particular characterized by the following points.

Firstly, it is an article fixing device for fixing an article (not illustrated) to an installation panel.

Secondly, the article fixing device is constituted as follows.

### (1) Fixing device body

The fixing device body has a connect-through hole that connects through with a pass-through hole that passes through the installation panel from front to rear surfaces.

### (2) Fastening device

The fastening device is inserted through the connect-through hole of the fixing device body into the pass-through hole of the installation panel.

Thirdly, the fixing device body has a contact surface that extends larger than the inner diameter of the pass-through hole and contacts with the front surface of the installation panel.

Fourthly, the fastening device is constituted as follows.

### (1) Engaging sections

There is at least one pair of engaging parts that are opposed at a distance from the rear surface of the installation panel, and project outward larger than the inner diameter of the pass-through hole and with their backs toward each other, when in a state in which the fastening device is inserted through the connect-through hole into the pass-through hole.

### (2) Lever

The lever is fixed by a shaft to the fastening device, and is for rotating so that the fastening device is moved toward the direction of being retracted from the pass-through hole, and the engaging sections are brought into contact with the rear surface of the installation panel.

It also may be made such that the engaging sections are matched and inserted into the pass-through hole from the front surface side toward the rear surface side of the installation panel, which are elastically contracted in diameter when passing through the pass-through hole, and are restored by elastic restoring force after passing through. Thus, the fastening device can be inserted with one touch into the pass-through hole of the installation panel by utilizing the elasticity of the engaging sections.

The engaging sections also may be constituted as follows.

### (1) Hinge part

The hinge part is connected to the fastening device.

### (2) Inclined surface

The inclined surface extends backward with respect to the direction of insertion from the hinge part, and is inclined diagonally outward.

### (3) Opposing surface

The opposing surface bends back from the top of the inclined surface and is inclined diagonally inward, and is positioned at a distance from the rear surface of the installation panel, and contacts in parallel with the rear surface of the installation panel when in a fixed state having been retracted by rotation of the lever.

Thus, the engaging sections are drawn inward by rotation of a lever, whereby the opposing surfaces that were inclined diagonally inward can be brought into contact in parallel with the rear surface of the installation panel.

The article fixing device according to the present invention also may have the following characteristics.

The following constitution also may be provided between the fixing device body and the fastening device.

### (1) Provisional fastening means (for example, elastic claws and step parts)

The provisional fastening means (for example, elastic claws and step parts) are for provisionally fastening the fastening device in a state having been inserted into the connect-through hole, and for allowing release of the provisionally fastened state by rotation of the lever.

Thus, the fastening device can be provisionally fastened on the fixing device body.

The provisional fastening means also may be constituted as follows.

### (1) Elastic claws

There is at least one pair of elastic claws that are provided on the fixing device body, and are placed upright facing opposite to each other on the perimeter of the connect-through hole.

### (2) Step parts

The step parts are provided on the fastening device, and each of the elastic claws is to be elastically inserted respectively.

Thus, the elastic claws that are placed upright on the perimeter of the connect-through hole of the fixing device body are elastically inserted into the step parts, whereby the fastening device can be provisionally fixed on the fixing device body.

The lever also may be provided with release stopping means (for example, rib) for stopping release of the provisional fastening means (for example, elastic claw and step part).

The elastic claws and step parts were given as an example of provisional fastening means, but it is not limited to this. Also, the rib was given as an example of release stopping means, but it is not limited to this.

Thus, the fastening device, when in a state of being provisionally fastened to the connect-through hole of the fixing device body, can be prevented from inadvertently separating from the fixing device body.

The fixing device body can be made as a bumper retainer for fixing an automobile bumper, being the article, to a body panel, being the installation panel.

In this case, the bumper as the article can be fixed to the body panel as the installation panel, by means of the bumper retainer as the fixing device body.

Rotation restricting means (for example, contacted part and elastic contact piece) for stopping unexpected rotation of the lever are provided between the fixing device body and the lever.

Thus, the lever is stopped from unexpected rotation, whereby the fastening device, when in a state of being provisionally fastened to the connect-through hole of the fixing device body, can be prevented from inadvertently separating from the fixing device body.

The rotation restricting means also may be constituted by an elastic contact piece that is provided on the lever, and a contacted part, that is provided on the fixing device body, is positioned within the rotational track of the elastic contact piece, and is contacted by the elastic contact piece.

Thus, the rotation restricting means can be provided with an optimal constitution.

It also may be made such that the release stopping means (for example, rib) allows the release-stopped state of the provisional fastening means (for example, elastic claw and step part) to be released when the rotation-restricted state by the rotation restricting means (for example, contacted part and elastic contact piece) is released and the lever is rotated.

The rib was given as an example of release stopping means, but it is not limited to this. Furthermore, the elastic claw and step part were given as an example of provisional fastening means, but it is not limited to this.

Thus, the release-stopped state of the provisional fastening means can be released when the rotation-restricted state by the rotation restricting means is released and the lever is rotated.

### Effect of the Invention

By being constituted as above, the present invention performs effects as described below.

That is, according to the invention described in claim 1, not only is a fastening device inserted through a connect-through hole on a fixing device body into a pass-through hole on an installation panel, whereby the article can be provisionally installed on the installation panel, but also, engaging sections are drawn inward by rotation of a lever, whereby the engaging sections can be made to adhere closely to the rear surface of the installation panel, and the article can be fixed on the installation panel without rattling.

In addition to this, because the engaging sections can be made to adhere closely to the rear surface of the installation panel by drawing the engaging sections inward by rotation of the lever, the strength of catch-coupling with the installation panel can be increased by setting higher the amount by which the engaging sections project outward.

### Brief Description of the Drawings

FIG. 1 is a cross-sectional view of article fixing device, showing one example of a first illustrative example (not part of the invention).
FIG. 2 is a plan view of the article fixing device.
FIG. 3 is another cross-sectional view of the article fixing device.
FIG. 4 is an enlarged view of a part of the article fixing device.
FIG. 5 is a cross-sectional view of the state in which the lever was turned down, corresponding to FIG. 1.
FIG. 6 is a cross-sectional view of the state in which the lever is turned down, corresponding to FIG. 3.
FIG. 7 is a diagram for describing the engaging section of the fastening device.
FIG. 8 is a sectional view of a fastening device, showing one example of a second illustrative example (not part of the invention).
FIG. 9 is a sectional view of a fastening device, showing one example of a third illustrative example (not part of the invention).
FIG. 10 is a plan view of the pass-through hole.
FIG. 11 is a sectional view of an article fixing device, showing one example of an embodiment of the present invention.
FIG. 12 is a cross-sectional view of a state of rotation of the lever, corresponding to FIG. 11.
FIG. 13 is a perspective view in partial section of the article fixing device according to an embodiment of the present invention.
FIG. 14 is a perspective view enlarging a part, corresponding to FIG. 13.
FIG. 15 is a perspective view for describing the state of catch-coupling between the contacted part on the fixing device body and the catch-coupling projection on the lever, corresponding to FIG. 13.
FIG. 16 is a perspective view when rotating while pushing the operating projection on the lever, corresponding to FIG. 13.
FIG. 17 is a perspective view of a fastening device, showing one example of a fourth illustrative example (not part of the invention).
FIG. 18 is another perspective view of the fastening device, corresponding to FIG. 17.
FIG. 19 is a perspective view of the state in which the lever is turned down toward the left, corresponding to FIG. 17.
FIG. 20 is a plan view of the fastening device, corresponding to FIG. 19.
FIG. 21 is a side view of the fastening device, corresponding to FIG. 19.
FIG. 22 is a cross-sectional view along the A-A line in FIG. 19.
FIG. 23 is a cross-sectional view along the B-B line in FIG. 19.
FIG. 24 is a perspective view of the state in which the lever is turned down toward the right, corresponding to FIG. 17.
FIG. 25 is a plan view of the fastening device, corresponding to FIG. 24.
FIG. 26 is a side view of the fastening device, corresponding to FIG. 24.
FIG. 27 is a side view of a fastening device, showing one example of a fifth illustrative example (not part of the invention).
FIG. 28 is another side view of the fastening device, corresponding to FIG. 27.
FIG. 29 is a decomposed perspective view of a fastening device main body and a pin, showing one example of a sixth illustrative example (not part of the invention).

### Illustrative Examples and Embodiment of the Invention

### (Article fixing device 10)

In the drawings, numeral 10 indicates the article fixing device. For example, this article fixing device 10 is a bumper retainer for an automobile, and is used for fixing a bumper (not illustrated) as an article to a fender or other body panel as an installation panel 20.

A bumper retainer for an automobile was given as an example of the article fixing device 10, but it is not limited to this. It also may be used for fixing other articles of automobiles, or is not limited even to articles of automobiles, but also may be used for fixing articles of trains, airplanes, ships, and other vehicles, or of buildings, furniture, home electrical appliances, office equipment, and the like. Also, a bumper was given as an example of the article, but just as with the article fixing device 10, it is not limited to this. Furthermore, a fender or other body panel was given as an example of the installation panel 20, but it is not limited to fenders, not only can it be used broadly for body panels, but also, just as with the article fixing device 10, it is not limited even to body panels.

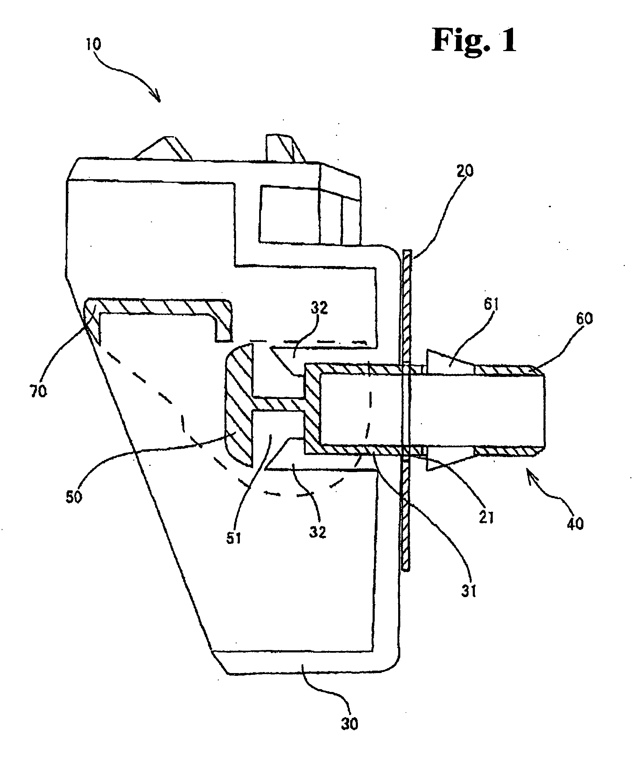

As shown in FIG. 1, the article fixing device 10, broadly divided, has the following parts.
(1) Fixing device body 30
(2) Fastening device 40

The parts of the article fixing device 10 are not limited to the abovementioned (1) and (2).

### (Installation panel 20)

As shown in FIG. 1, the installation panel 20 is provided with a pass-through hole 21.

The pass-through hole 21 is formed as a square that passes through the installation panel 20 from front to rear surfaces.

Although square was given as an example of the shape of the pass-through hole 21, it is not limited to this, and it also may be another polygonal shape, circular, oblong, elliptical, or any geometric shape.

### (Fixing device body 30)

As shown in FIG. 1, the fixing device body 30 is a bumper retainer for an automobile, and has a connect-through hole 31 that connects through with the pass-through hole 21 of the installation panel 20.

The connect-through hole 31 is formed as a square having the same shape as the pass-through hole 21 of the installation panel 20.

The connect-through hole 31 was made the same shape as the pass-through hole 21 of the installation panel 20, but it is not limited to this, and it also may be a different shape.

Also, as shown in FIG. 1, the fixing device body 30 has a contact surface that extends larger than the inner diameter of the pass-through hole 21 and contacts with the front surface of the installation panel 20. The contact surface corresponds with the front surface of the fixing device body 30, but it is not limited to the front surface of the fixing device body 30.

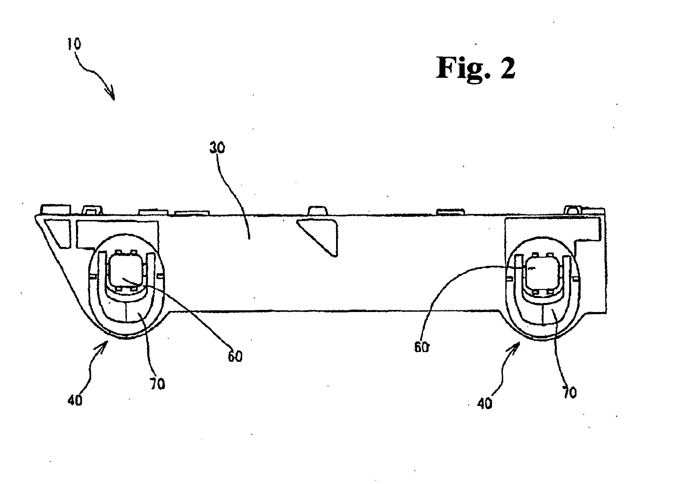

Meanwhile, although it is not illustrated, two connect-through holes 31 also are formed on the fixing device body 30, because a pair, total of two, of fastening devices 40 to be described is installed on the left and the right as shown in FIG. 2. Also, two pass-through holes 21 are formed likewise on the installation panel 20.

Also, as shown in FIG. 2, the fixing device body 30 is provided with each of the following parts between it and the fastening device 40 to be described.

The followings (1) and (2) will be described.
(1) Elastic claw 32 as a constituent element of provisional fastening means
(2) Deformation preventing part 33

The respective parts of the fixing device body 30 are not limited to the abovementioned (1) and (2).

### (Elastic claw 32 as a constituent element of provisional fastening means)

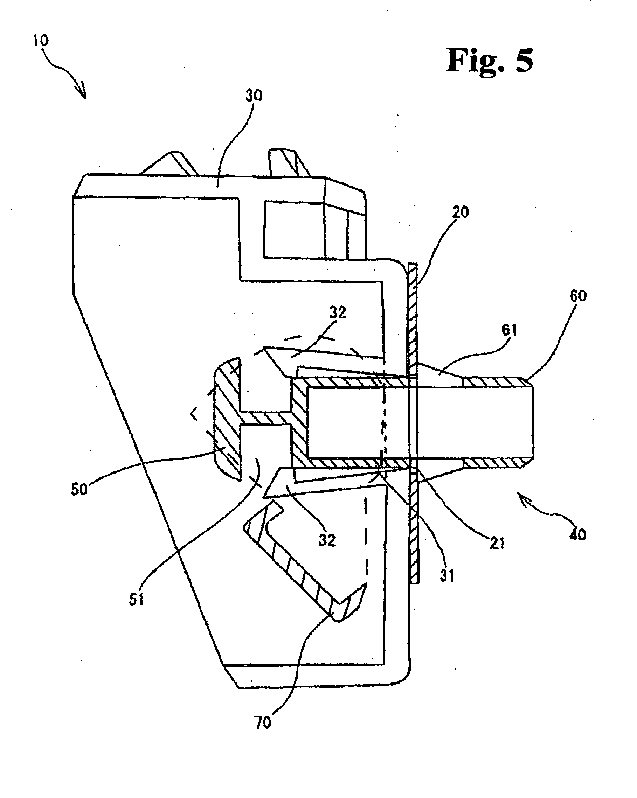

The provisional fastening means are for provisionally fastening the fastening device 40 in a state having been inserted into the connect-through hole 31 as shown in FIG. 1, and for allowing release of the provisionally fastened state by rotation of a lever 70 as shown in FIG. 5.

Specifically, as shown in FIG. 1, at least one pair of elastic claws 32, which are placed upright facing opposite to each other on the perimeter of the connect-through hole 31, is provided as the fixing device body 30.

In FIG. 1, the elastic claws 32 are opposed, top and bottom, and are formed in a wedge shape in section, opening in an outward tapering shape in section going backward with respect to the direction of insertion of the fastening device 40.

As for the elastic force of the elastic claws 32, because the fixing device body 30 is molded with a synthetic resin having suitable elasticity and rigidity, the elastic restoring force of the resin is used.

Although a pair of elastic claws 32 was formed, the number of elastic claws 32 is not limited to two, and three or more also may be provided.

### (Deformation preventing part 33)

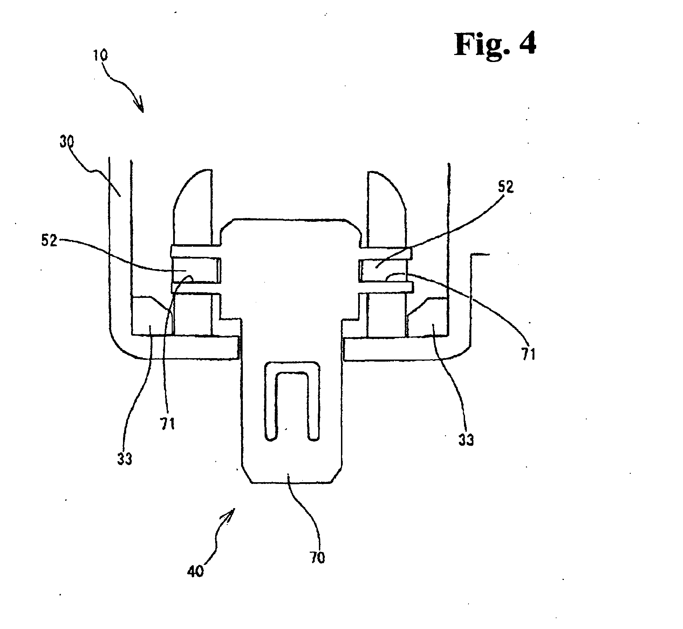

The deformation preventing part 33 is for the lever 70 of the fastening device 40, to be described, to contact on the instance of outward deformation during rotation of the lever 70, as shown in FIG. 5, and as shown in FIG. 4, so as to prevent deformation of the lever 70.

Specifically, as shown in FIG. 4, a pair of deformation preventing parts 33 is formed on two sides, left and right, of the connect-through hole 31, rising up from the bottom of the fixing device body 30.

Although a pair of deformation preventing parts 33 was formed, the number of deformation preventing parts 33 is not limited to two, and one or three or more also may be provided.

### (Fastening device 40)

As shown in FIG. 1, the fastening device 40 is inserted through the connect-through hole 31 of the fixing device body 30 into the pass-through hole 21 of the installation panel 20.

### A pair, total of two, of fastening devices 40 is used on the left and the right.

Although two was given as an example of the number of fastening devices 40, it is not limited to this, and one or three or more also may be used.

Specifically, as shown in FIG. 1, the fastening device 40 is provided with each of the following parts.

The following (1) to (3) will be described.
(1) Head part 50
(2) Leg part 60
(3) Lever 70

The respective parts of the fastening device 40 are not limited to the abovementioned (1) to (3).

### (Head part 50)

The head part 50 has an outer shape that is a size larger than the inner shape of the connect-through hole 31 of the fixing device body 30, and it is formed as a square in plan view.

Although the outer shape of the head part 50 was formed as a square in plan view, it is not limited to this, and it also may be formed as a circle.

As shown in FIG. 1, the head part 50 is provided with each of the following parts.

The respective parts of the head part 50 are not limited to the followings (1) and (2).

### (1) Shaft parts 51

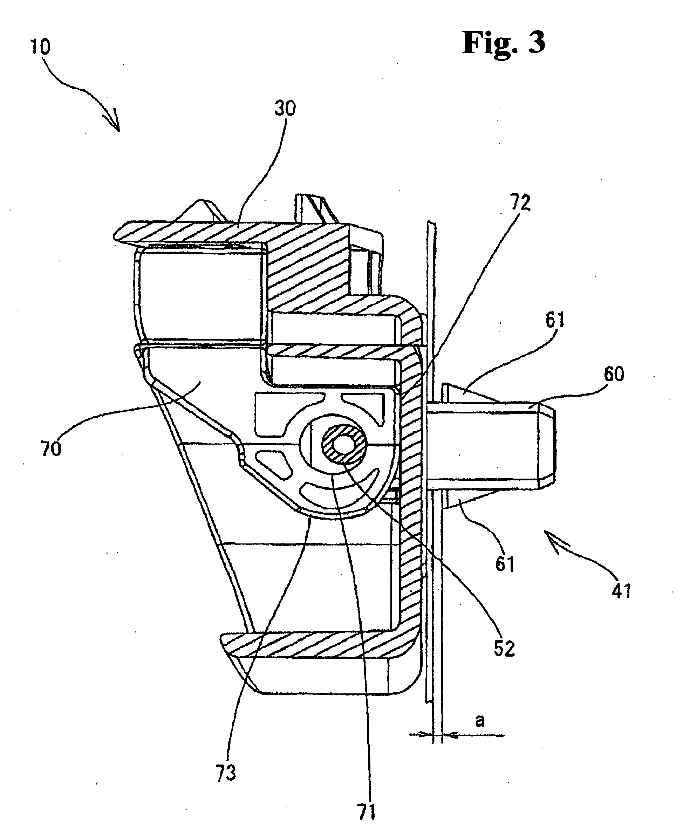

As shown in FIG. 3, a pair of shaft parts 51, left and right, projects outward from two sides, left and right, of the head part 50, and is formed as a circle in section.

The shaft parts 51 are for supporting the lever 70, to be described, to be capable of rotation.

### (2) Step parts 52 as a constituent element of provisional fastening means

As shown in FIG. 1, the step parts 52 are for each of the elastic claws 32 to be elastically inserted when in a state in which the fastening device 40 was inserted up to mid-course into the connect-through hole 31 of the fixing device body 30, that is, in the provisionally fastened state.

When the fastening device 40 is inserted more deeply into the connect-through hole 31 of the fixing device body 30, as shown in FIG. 5, the top and bottom elastic claws 32 decouple from the top and bottom step parts 52, and ride up on the outer surface of the leg part 60 to be described.

The elastic claws 32 were provided on the fixing device body 30 and the step parts 52 were provided on the fastening device 40 as provisional fastening means, but it is not limited to this, and conversely, the step parts may be provided on the fixing device body 30 and the elastic claws may be provided on the fastening device 40.

### (Leg part 60)

As shown in FIG. 1, the leg part 60 extends from the rear surface of the head part 50, has an outer shape that is equal to or smaller than the inner shape of the connect-through hole 31 of the fixing device body 30, and is formed as a square in section.

Although the outer shape of the leg part 60 was formed as a square in section, it is not limited to this, and it also may be formed as another polygonal shape.

As shown in FIG. 1, the leg part 60 is provided with each of the following parts. The following (1) will be described.

### (1) Engaging sections 61

The respective parts of the leg part 60 are not limited to the abovementioned (1).

### (Engaging sections 61)

As shown in FIG. 1, there is at least one pair of engaging sections 61 that are opposed at a distance from the rear surface of the installation panel 20, and project outward larger than the inner diameter of the pass-through hole 21 and with their backs toward each other, when in a state in which the fastening device 40 was inserted through the connect-through hole 31 into the pass-through hole 21.

Specifically, the engaging sections 61 are matched and inserted into the pass-through hole 21 from the front surface side toward the rear surface side of the installation panel 20, are elastically contracted in diameter when passing through the pass-through hole 21, and are restored by elastic restoring force after passing through.

That is, as shown in FIG. 1, the engaging sections 61 respectively project in a claw form from the top and bottom surfaces of the leg part 60, are connected to the leg part 60 by means of hinge parts, and are formed in a wedge shape in section, having an inclined surface that is inclined diagonally outward going backward with respect to the direction of insertion of the leg part 60, from the hinge part to the free end.

As for the elastic force of the engaging sections 61, because the leg part 60 is molded with a synthetic resin having suitable elasticity and rigidity, the elastic restoring force of the resin is used.

As shown in FIG. 3, when in a state in which the leg part 60 of the fastening device 40 is inserted into the connect-through hole 31 of the fixing device body 30 and is provisionally fastened by the provisional fastening means (elastic claws 32 and step parts 52), the distance between the front surface of the fixing device body 30 and the opposing surfaces of the engaging sections 61 opposite this is set to a length that is the plate thickness of the installation panel 20 or larger, in the present embodiment exceeding the plate thickness, whereby a gap *a* arises between the rear surface of the installation panel 20 and the opposing surfaces of the engaging sections 61.

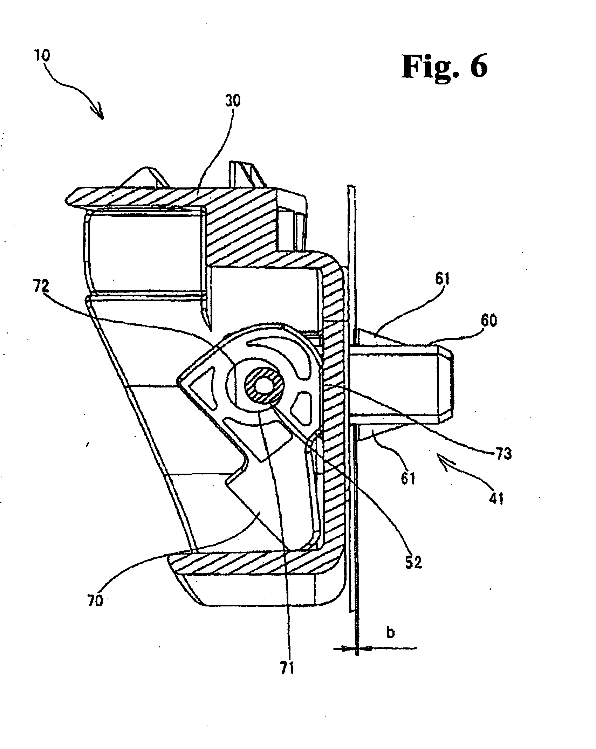

After that, as shown in FIG. 5 and FIG. 6, when the lever 70 to be described is rotated to turn downward, the leg part 60 is retracted toward the direction of being pulled out from the pass-through hole 21 and the connect-through hole 31, whereby the distance between the front surface of the fixing device body 30 and the opposing surfaces of the engaging sections 61 is set to a length that is the plate thickness of the installation panel 20 or smaller, in the present embodiment less than the plate thickness, whereby a wrap *b* arises between the installation panel 20 and the engaging sections 61. Therefore, the engaging sections 61 cannot be completely restored, and the opposing surfaces of the engaging sections 61 elastically contact with the rear surface of the installation panel 20.

Although a pair of engaging sections 61 was formed, the number of engaging sections 61 is not limited to two, and three or more also may be provided.

### (Lever 70)

As shown in FIG. 3 and FIG. 6, the lever 70 is fixed by a shaft to the fastening device 40, and is for rotating so that the fastening device 40 is moved toward the direction of being retracted from the pass-through hole 21, and the engaging sections 61 are brought into contact with the rear surface of the installation panel 20.

Specifically, as shown in FIG. 3, the lever 70 is provided with each of the following parts.

The respective parts of the lever 70 are not limited to the following (1) to (3).

### (1) Shaft holes 71

As shown in FIG. 3, the shaft holes 71 are respectively for a pair of shaft parts 51 on the left and right to be fitted.

Specifically, the shaft hole 71 is formed as a circle having an inner diameter that is greater than the outer diameter of the shaft part 51, and it is constituted such that the shaft part 51 moves inside the shaft hole 71, whereby the leg part 61 can be advanced and retracted with respect to the lever 70.

### (2) First cam surface 72

As shown in FIG. 3, in the state in which the lever 70 is raised, the first cam surface 72 is opposed at a distance from the bottom of the fixing device body 30.

### (3) Second cam surface 73

As shown in FIG. 3, the second cam surface 73 is continuous with the first cam surface 72, and the distance from the center of the shaft hole 71 is gradually set larger than the first cam surface 72, and as shown in FIG. 4, in the state in which the lever 70 is lowered, [the second cam surface] contacts the bottom of the fixing device body 30, and the leg part 60 is retracted toward the direction of being pulled out from the connect-through hole 31 of the fixing device body 30.

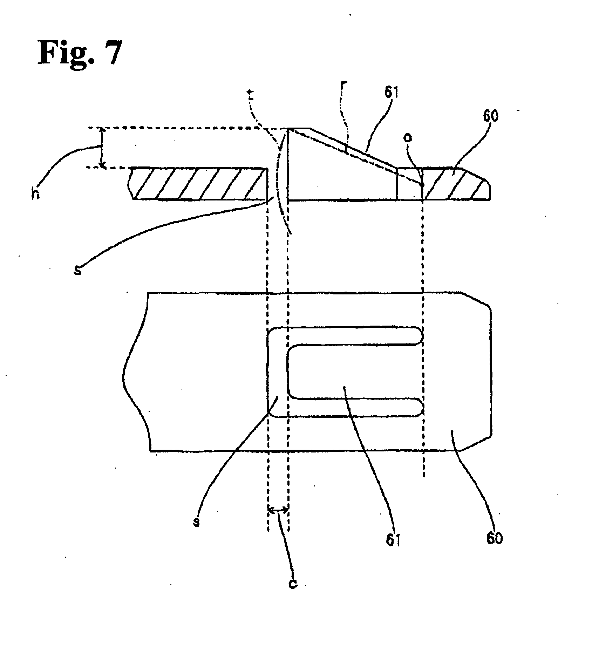

### (Explanation of FIG. 7)

Next, the relationship between a projection height *h* of an engaging section 61 and a clearance C of a slit S is explained using FIG. 7.

As shown in FIG. 7, a slit S having a square bracket shape punched through the leg part 60 of the fastening device 40, whereby a engaging section 61 is formed inside surrounded by the slit S. Also, the engaging section 61 is formed projecting by a projection height *h* outward from the outer surface of the leg part 60. The fastening device 40 rotates with the part lacking the slit S as a hinge part, and at this time, rotates following the rotational track of the single-dotted line with the fulcrum O provisionally on the center of the plate thickness of the leg part 60. A radius r of the rotational track is indicated by the double-dotted line connecting the fulcrum O and the tip of the engaging section 61.

The fulcrum O of the engaging section 61 is not limited to the center of the plate thickness of the leg part 60.

The strength of catch-coupling with the rear surface of the installation panel 20 can be increased by setting the projection height *h* of the engaging section 61 higher, but because the engaging section 61 is bent inward when passing through the pass-through hole 21 of the installation panel 20, the clearance C of the slit S must be set wide. However, when the clearance C is set wide, the gap *a* (FIG. 3) between the rear surface of the installation panel 20 and the opposing surface of the engaging section 61 after passing through the pass-through hole 21 of the installation panel 20, and becomes a cause of rattling.

Conversely, when the projection height *h* is set low, although the clearance C can be set narrow, there is a demerit that the strength of catch-coupling is lowered.

As opposed to this, as shown in FIG. 5 and FIG. 6, when the lever 70 is rotated to turn downward, the leg part 60 is retracted toward the direction of being pulled out from the pass-through hole 21 of the installation panel 20, whereby the opposing surfaces of the engaging sections 61 can be adhered closely to the rear surface of the installation panel 20.

Therefore, the influence of the clearance C can be reduced by retracting the leg part 60.

Accordingly, there is a merit that even in the case when the projection height *h* was set high and the clearance C was set wide, the article fixing device 10 can be installed without rattling, and the strength of catch-coupling can be set appropriately.

### (Method of installation of article fixing device 10)

The method of installation of the article fixing device 10 having the abovementioned constitution is next described.

First, as shown in FIG. 1, the fastening device 40 is provisionally fastened to the fixing device body 30.

Although the installation panel 20 was installed after provisionally fastening the fastening device 40 to the fixing device body 30, it is not limited to this, and the article fixing device 10 also may be provisionally fixed on the installation panel 20 by inserting fastening devices 40 in series when in a state in which each connect-through hole 31 of the fixing device body 30 was aligned with each pass-through hole 21 of the installation panel 20.

First, the leg parts 60 of the fastening devices 40 are matched and inserted into each connect-through hole 31 of the fixing device body 30.

When the fastening device 40 is inserted, each engaging section 61 thereof is pressed to the inner surface of the connect-through hole 31 of the fixing device body 30 and is once drawn inward, and when the fastening device 40 is inserted further, as shown in FIG. 1, the engaging section is again restored at the place having passed through the connect-through hole 31.

Also, when the fastening device 40 is inserted up to mid-course, as shown in FIG. 1, each elastic claw 32 of the fixing device body 30 is respectively inserted into each step part 52 of the fastening device 40, and it becomes in a provisionally fastened state.

Next, as shown in FIG. 1, the front ends of the leg parts 60 of the fastening devices 40, which project from the front surface of the fixing device body 30, are matched and inserted into each pass-through hole 21 of the installation panel 20.

When the leg part 60 is inserted, as shown in FIG. 1, the engaging sections 61 thereof are pressed to the inner surface of the pass-through hole 21 and are once drawn inward, and are restored on the rear surface side of the installation panel 20 after passing through the pass-through hole 21.

At this time, because the interval of opposition between the front surface of the fixing device body 30 and the engaging sections 61 of the fastening device 40 is set larger than the plate thickness of the installation panel 20, the article fixing device 10 becomes in a provisionally fixed state on the installation panel 20.

After that, in the case when fully fixing the article fixing device 10, the lever 70 should be turned downward toward the bottom of the article fixing device 10 as shown in FIG. 5 and FIG. 6.

When the lever 70 is turned down, the second cam surface 73 contacts with the bottom of the article fixing device 10, whereby the leg part 60 of the fastening device 40 is retracted toward the direction of being pulled out from the pass-through hole 21 and the connect through hole 31.

Therefore, the interval of opposition between the front surface of the fixing device body 30 and the engaging sections 61 of the fastening device 40 is narrowed, and the installation panel 20 is sandwiched within from above and below, whereby the article fixing device 10 is fixed on the installation panel 20 as shown in FIG. 5 and FIG. 6.

Also, during retraction of the leg part 60 of the fastening device 40, as shown in FIG. 5, the top and bottom elastic claws 32 decouple from the top and bottom step parts 52, and ride up on the outer surface of the leg part 60.

In order to unlock the fixed state of the article fixing device 10, the lever 70 should be raised toward the direction going away from the bottom of the article fixing device 10.

### (Second illustrative example)

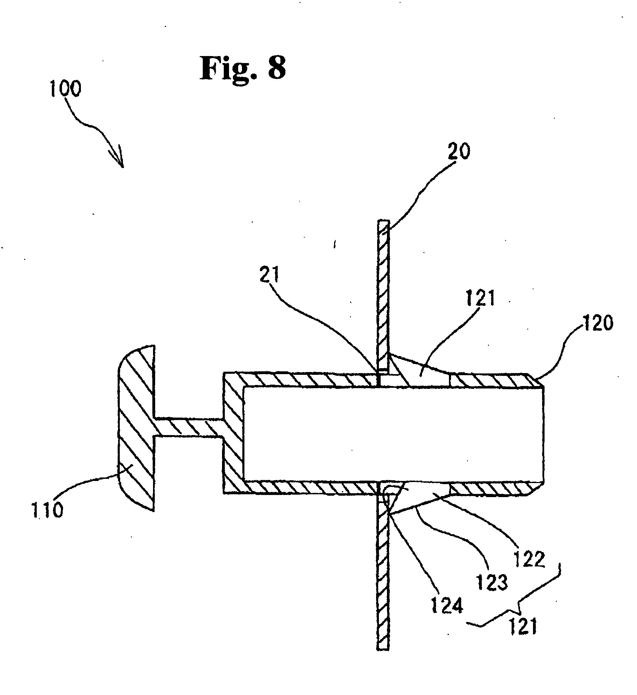

Next, a second illustrative example of a fastening device 100 is described using FIG. 8.

A characteristic of the present illustrative example is that, as shown in FIG. 8, engaging sections 121 of a fastening device 100 can be brought into parallel contact with the rear surface of an attachment panel 20 by rotating a lever 70 (not illustrated).

That is, as shown in FIG. 8, the fastening device 100 is provided with a head part 110 and a leg part 120, and as shown in FIG. 8, the engaging sections 121 of the leg part 120 are provided with each of the following parts.

The respective parts of the engaging sections 121 are not limited to the following (1) to (3).

### (1) Hinge part 122

As shown in FIG. 8, the hinge part 122 is connected to the fastening device 100.

### (2) Inclined surface 123

As shown in FIG. 8, the inclined surface 123 extends backward with respect to the direction of insertion from the hinge part 122, and is inclined diagonally outward.

### (3) Opposing surface 124

As shown in FIG. 8, the opposing surface 124 bends back from the top of the inclined surface 123 and is inclined diagonally inward, and is positioned at a distance from the rear surface of the installation panel 20 when in a provisionally fastened state by provisional fastening means, that is, elastic claws 32 and step parts 52, and contacts in parallel with the rear surface of the installation panel 20 when in a fixed state having been retracted by rotation of the lever 70.

The structure of the fastening device 100 excluding the engaging sections 121, and the structures of the fixing device body 30 and the installation panel 20 are the same as in the first embodiment that was previously described using FIGS. 1 to 7. Also, in the description of the present embodiment, the same symbols are used for the same constituent parts as in the first embodiment that was previously described, and the descriptions are omitted.

### (Method of installation of fastening device 100)

The method of installation of the fastening device 100 having the abovementioned constitution is next described.

First, the description of the fixing device body 30 is omitted, but after the fastening device 100 is put into a provisionally fastened state, as shown in FIG. 8, the front ends of the leg parts 120 of the fastening devices 100, which project from the front surface of the fixing device body 30 (not illustrated), are matched and inserted into each pass-through hole 21 of the installation panel 20.

When the leg part 60 is inserted, the engaging sections 121 thereof are pressed to the inner surface of the pass-through hole 21 and are once drawn inward, and are restored on the rear side of the installation panel 20 after passing through the pass-through hole 21.

At this time, the interval of opposition between the front surface of the fixing device body 30 (not illustrated) and vertex between the inclined surface 123 and opposing surface 124 of the fastening device 100 is set to the plate thickness of the installation panel 20 or larger. It is preferably matched to the plate thickness of the installation panel 20, and the vertex between the inclined surface 123 and the opposing surface 124 is brought into elastic contact with the rear surface of the installation panel 20, whereby rattling on installation of the article fixing device in the provisionally fixed state can be reduced.

After that, in the case when fully fixing the article fixing device 10, although it is not illustrated, the lever 70 should be turned downward toward the bottom of the article fixing device 10.

When the lever 70 is turned down, although it is not illustrated, the leg part 120 of the fastening device 100 is retracted toward the direction of being pulled out from the pass-through hole 21 and the connect through hole 31.

At this time, although it is not illustrated, the engaging sections 121 rotate outward centered on the hinge parts 122, and the opposing surfaces 124 contact in parallel with the rear surface of the installation panel 20, whereby the article fixing device 10 is fixed on the installation panel 20.

### (Third illustrative example)

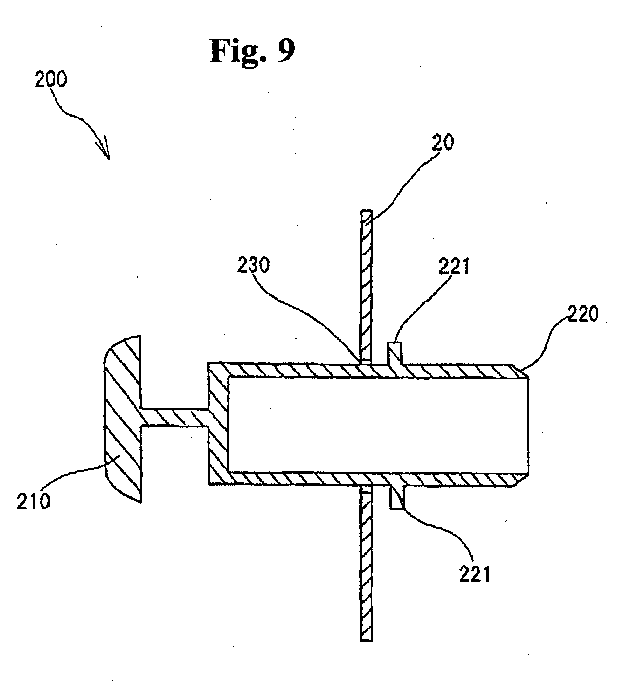

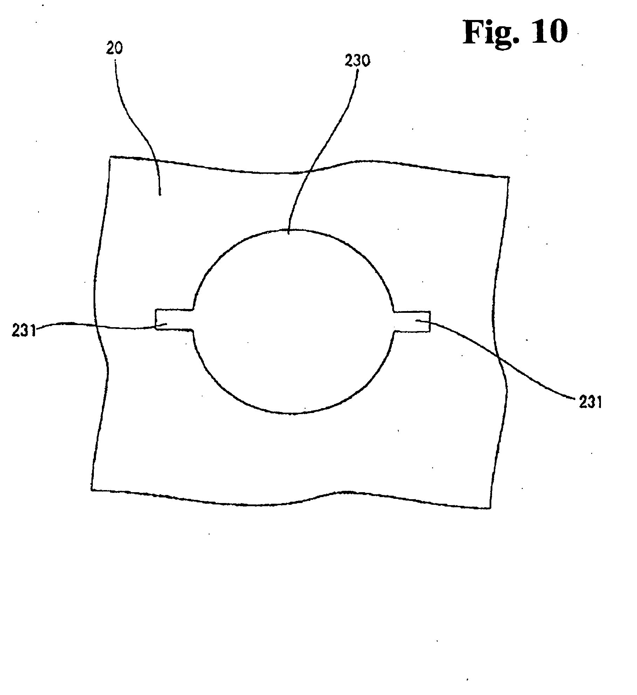

Next, a third illustrative example of a fastening device 100 is described using FIG. 9 and FIG. 10.

A characteristic of the present illustrative example is firstly that, as shown in FIG. 9, engaging sections 221 are made to project outward in a key form, for example, a rectangular form, larger than the inner diameter of a pass-through hole 230.

A second characteristic of the present illustrative example is that, as shown in FIG. 10, key slots 231 through which the engaging sections 221 can pass are provided on the pass-through hole 230.

Although two engaging sections 221 are provided, and two key slots 231, being the same number, also are provided, it is not limited to this, and three or more also may be provided.

Meanwhile, the structure of the fastening device 200 excluding the engaging sections 221, and the structures of the fixing device body 30 and the installation panel 20 are the same as in the first illustrative example that was previously described using FIGS. 1 to 7. Also, in the description of the present illustrative example, the same symbols are used for the same constituent parts as in the first illustrative example that was previously described, and the descriptions are omitted.

### (Method of installation of fastening device 200)

The method of installation of the fastening device 200 having the abovementioned constitution is next described.

First, the description of the fixing device body 30 is omitted, but after the fastening device 200 is put into a provisionally fastened state, as shown in FIG. 9, the front ends of the leg parts 220 of the fastening devices 200, which project from the front surface of the fixing device body 30 (not illustrated), are matched and inserted into each pass-through hole 230 of the installation panel 20.

At this time, the engaging sections 221 of the fastening device 200 are matched and inserted into the key slots 231 of the pass-through hole 230, and the fastening device 200 is rotated a prescribed angle, in the present embodiment 90 degrees.

The rotational angle of the fastening device 200 is not limited to 90 degrees.

At this time, the fastening device 200 may be rotated alone, or may be rotated integrally with the fixing device body 30.

When the rotational angle of the fastening device 200 is achieved, as shown in FIG. 9, the engaging sections 221 of the fastening device 200 are opposed at a distance from the rear surface of the installation panel 20.

After that, in the case when fully fixing the article fixing device 10, although it is not illustrated, the lever 70 should be turned downward toward the bottom of the article fixing device 10.

When the lever 70 is turned down, although it is not illustrated, the leg part 220 of the fastening device 200 is retracted toward the direction of being pulled out from the pass-through hole 21 and the connect through hole 230.

At this time, although it is not illustrated, the engaging sections 221 contact with the rear surface of the installation panel 20, whereby the article fixing device 10 is fixed on the installation panel 20.

### (Embodiment of the invention)

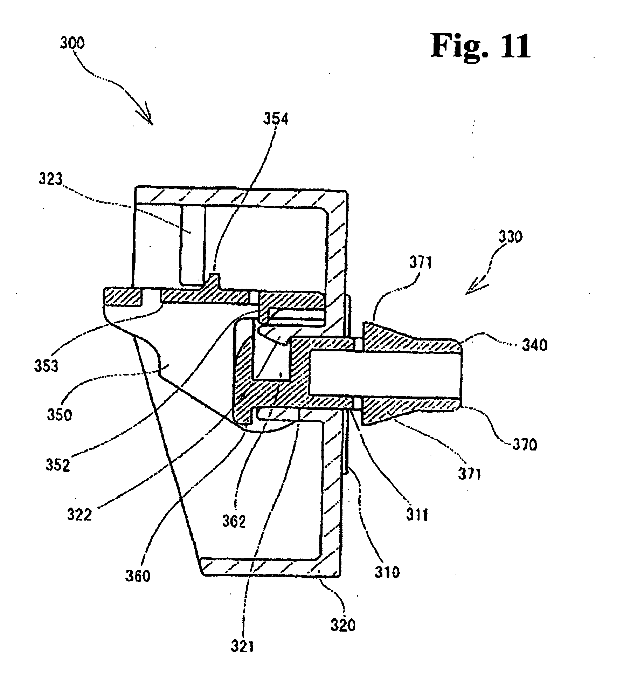

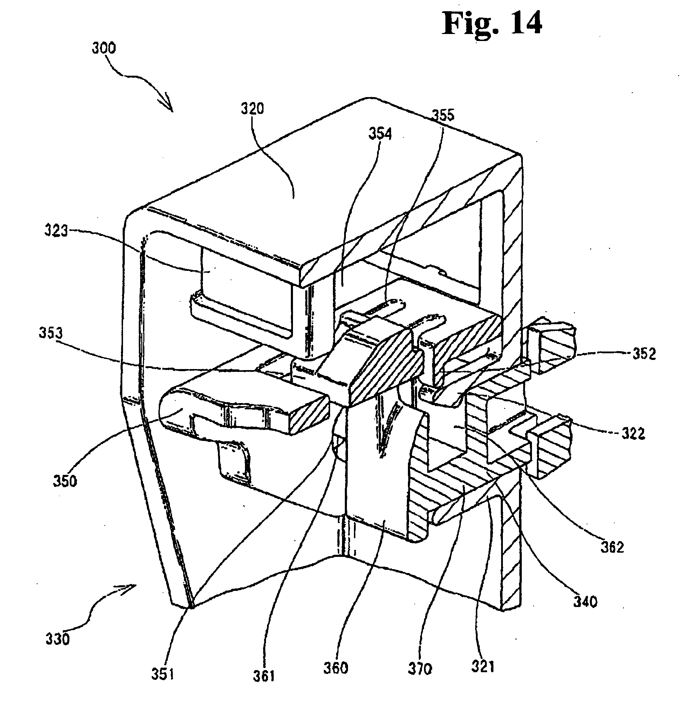

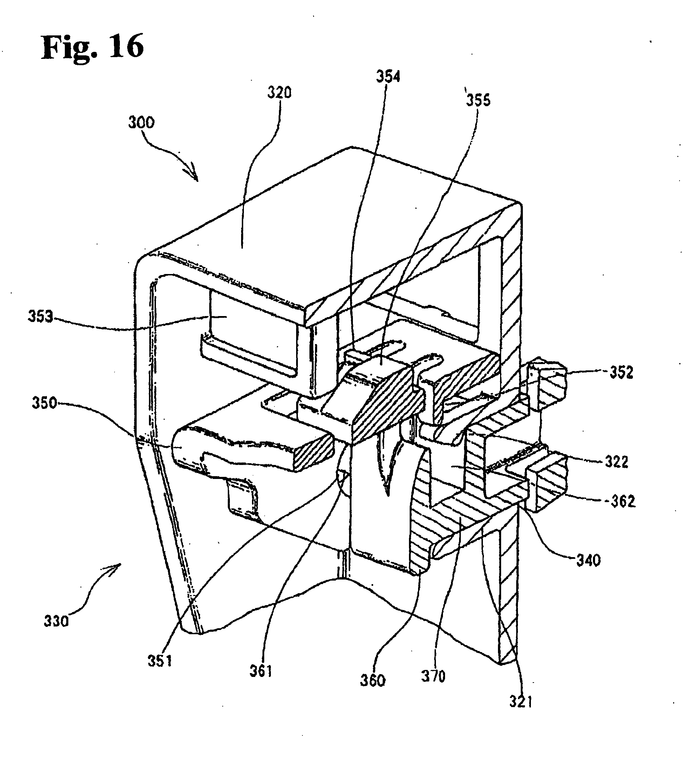

Next, an embodiment of a fastening device 330 is described using FIGS. 11 to 16.

A characteristic of the present embodiment is firstly that release stopping means for stopping release of the provisional fastening means are provided.

Secondly, a characteristic of the present embodiment is that rotation restricting means for stopping unexpected rotation of a lever 350 are provided.

### (Article fixing device 300)

The article fixing device 300 according to the present embodiment is for fixing a bumper or other article (not illustrated) into a pass-through hole 311 of a body panel or other installation panel 310.

A body panel was given as an example of the installation panel 310, but it is not limited to this. A bumper was given as an example of the article, but it is not limited to this.

Specifically, as shown in FIGS. 11 to 16, the article fixing device 300, broadly divided, has the following parts. The following (1) to (2) will be described.
(1) Fixing device body 320 (bumper retainer)
(2) Fastening device 330

The parts of the article fixing device 300 are not limited to the abovementioned (1) and (2).

### (Fixing device body 320 (bumper retainer))

The fixing device body 320 is, for example, a bumper retainer, and as shown in FIG. 11, it has a connect-through hole 321 that connects through with the pass-through hole 311 that passes through the installation panel 310 from front to rear surfaces.

A bumper retainer was given as an example of the fixing device body 320, but it is not limited to this.

Concretely, as shown in FIG. 11, the fixing device body 320 is provided with each of the following parts. The respective parts of the fixing device body 320 are not limited to the following (1) to (3).

### (1) Connect-through hole 321

As shown in FIG. 11, the connect-through hole 321 connects through with the pass-through hole 311 of the installation panel 310, which passes through the installation panel 310 from top to bottom.

### (2) Elastic claw 322 (one example of provisional fastening means)

One elastic claw 322 projects elastically from above into the connect-through hole 321, and extends backward with respect to the direction of insertion of the fastening device 330.

Specifically, as shown in FIG. 11, the elastic claw 322 is elastically inserted into a step part 362 that is provided on the fastening device 330, to be described, when the fastening device 330 is inserted into the connect-through hole 321, and it functions as provisional fastening means.

As shown in FIG. 11, the provisional fastening means are for provisionally fastening the fastening device 330 in a state having been inserted into the connect-through hole 321, and for allowing release of the provisionally fastened state by rotation of a lever 350 to be described.

The elastic claw 322 of the fixing device body 320 and the step part 362 of the fastening device 330 (fastening device main body 340) were given as an example of provisional fastening means, but it is not limited to this.

### (3) Contacted part 323 (one example of rotation restricting means)

As shown in FIG. 11, the contacted part 323 is positioned within the rotational track of an elastic contact piece 353 that is provided on the lever 350 to be described, and is contacted by the elastic contact piece 353, and they function as rotation restricting means.

The rotation restricting means are provided between the fixing device body 320 and the lever 350, and are for stopping unexpected rotation of the lever 70.

### (Fastening device 330)

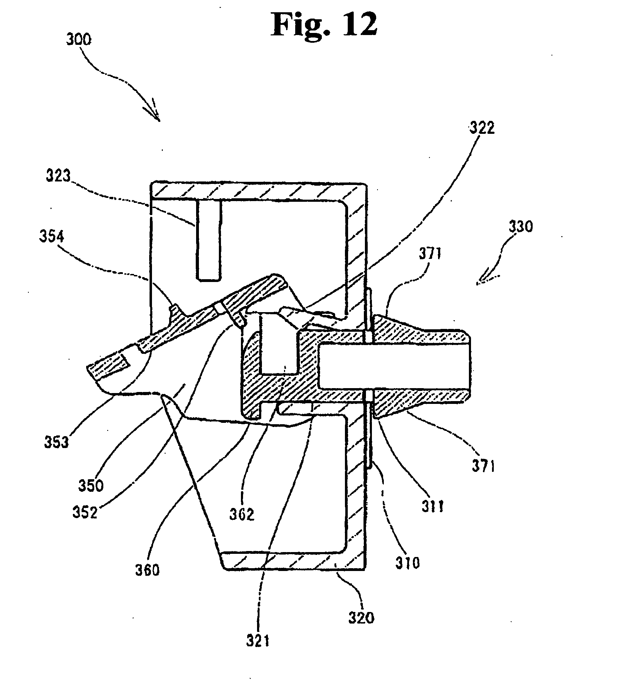

As shown in FIG. 11 and FIG. 12, the fastening device 330 is inserted through the connect-through hole 321 of the fixing device body 320 into the pass-through hole 311 of the installation panel 310.

Specifically, as shown in FIG. 11 and FIG. 12, the fastening device, broadly divided, has the following parts. The following (1) to (2) will be described.
(1) Fastening device main body 340
(2) Lever 350

The parts of the fastening device 330 are not limited to the above (1) to (2).

### (Fastening device main body 340)

As shown in FIG. 11 and FIG. 12, the fastening device main body 340 is clip-shaped, and is inserted through the connect-through hole 321 of the fixing device body 320 into the pass-through hole 311 of the installation panel 310.

Specifically, the fastening device main body 340 is provided with each of the following parts. The following (1) to (2) will be described.
(1) Head part 360
(2) Leg part 370

The respective parts of the fastening device main body 340 are not limited to the abovementioned (1) and (2).

### (Lever 350)

As shown in FIGS. 11 to 16, the lever 350 is fixed by a shaft to the fastening device 330, and is for rotating so that the fastening device 330 is moved toward the direction of being retracted from the pass-through hole 311, and engaging sections 371 to be described are brought into contact with the rear surface of the installation panel 310.

As shown in FIGS. 11 to 16, the lever 350 is provided with each of the following parts. The respective parts of the lever 350 are not limited to the following (1) to (3).

### (1) Shaft holes 351

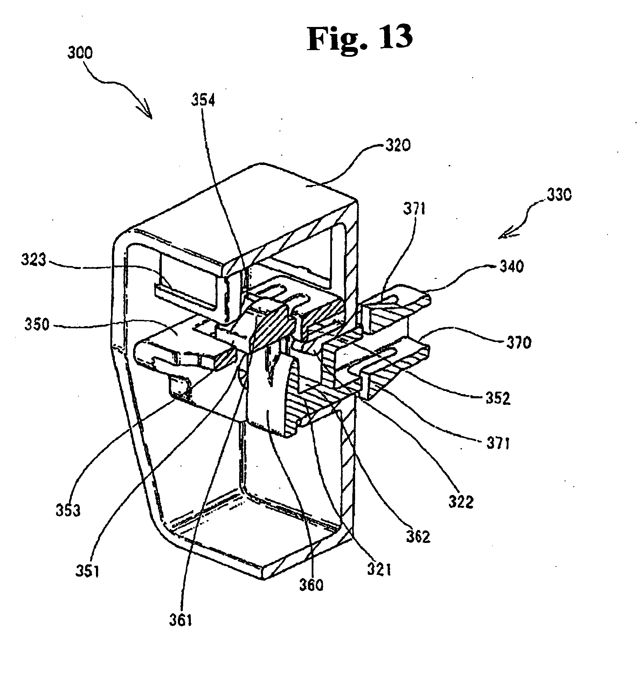

As shown in FIGS. 13 to 16, the shaft holes 351 are for supporting shaft parts 361 of the fastening device main body 340, to be described, so as to be capable of rotation.

### (2) Rib 352 (one example of release stopping means)

As shown in FIG. 11, the rib 352 extends toward the elastic claw 322 when in the provisionally fastened state of the fastening device main body 340, that is, in the non-rotating state of the lever 350, and the front end contacts with the top surface of the elastic claw 322, whereby the elastic claw 322 is blocked from being bent upward and decoupling from the step part 362 to be described, and it functions as release stopping means.

The release stopping means are for stopping release of the provisional fastening means that are constituted by the elastic claw 322 and the step part 362.

The rib 352 was given as an example of release stopping means, but it is not limited to this.

### (3) Elastic contact piece 353 (one example of rotation restricting means)

As shown in FIGS. 11-16, one end of the elastic contact piece 353, being on the front end side of the direction of insertion of the fastening device 330, serves as a hinge, and the other end extends backward with respect to the direction of insertion, and the other end serves as a free end.

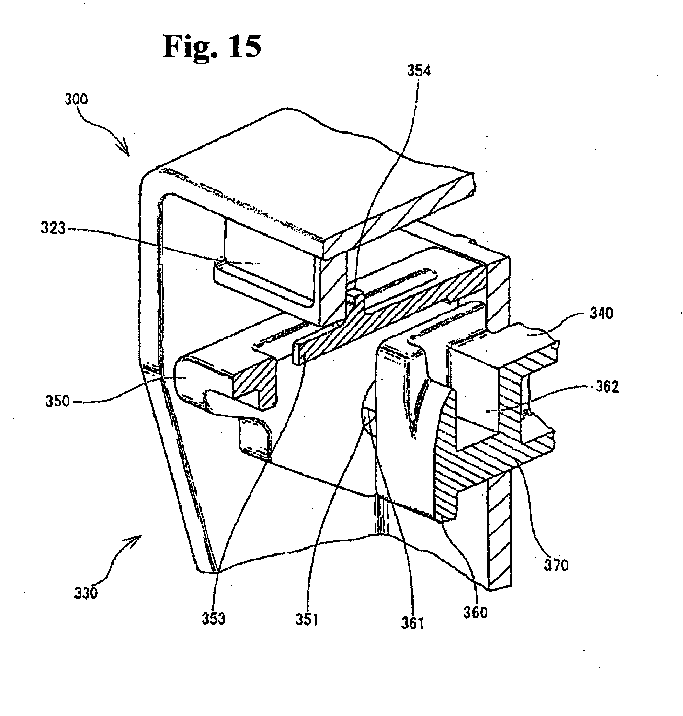

Specifically, as shown in FIG. 11 and FIG. 15, the elastic contact piece 353 elastically contacts with the contacted part 323 of the fixing device body 320 when in the provisionally fastened state of the fastening device main body 340, that is, in the non-rotating state of the lever 350, and it functions as the aforementioned rotation restricting means.

As shown in FIGS. 11 to 16, the elastic contact piece 353 is provided with each of the following parts. The respective parts of the elastic contact piece 353 are not limited to the following (4) to (5).

### (4) Catch-coupling projection 354

As shown in FIG. 11 and FIG. 15, the catch-coupling projection 354 rises up in a roughly trapezoidal shape from the top surface of the elastic contact piece 353 toward the contacted part 323 of the fixing device body 320.

Specifically, as shown in FIG. 11 and FIG. 15, the inclined surface of the roughly trapezoidal-shaped catch-coupling projection 354 contacts with the contacted part 323 of the fixing device body 320, whereby rotation of the lever 70 is blocked.

### (5) Operating projection 355

As shown in FIGS. 13 to 16, the operating projection 355 stands to the side of the catch-coupling projection 354, and rises up in a roughly trapezoidal shape from the elastic contact piece 353. The operating projection 355 projects with a lateral shift from the contacted part 323 of the fixing device body 320, and projects greatly compared with the catch-coupling projection 354.

When the operating projection 355 is pushed down with a finger, the elastic contact piece 353 rotates downward centered on the hinge, and the catch-coupling projection 354 descends against the contacted part 323 of the fixing device body 320.

When the elastic contact piece 353 is further rotated in this state, as shown in FIG. 12, the catch-coupling projection 354 passes under the contacted part 323 of the fixing device body 320, and rotation of the elastic contact piece 353 becomes possible.

At this time, the bottom end of the contacted part 323 of the fixing device body 320 slides on the inclined surface of the catch-coupling projection 354, whereby the catch-coupling projection 354 is pushed up toward the bottom, whereby the operating force on the operating projection 355 can be reduced.

### (Head part 360)

As shown in FIG. 11, the head part 360 has an outer shape that is a size larger than the inner shape of the connect-through hole 321 of the fixing device body 320.

As shown in FIGS. 11 to 16, the head part 360 is provided with each of the following parts. The respective parts of the head part 360 are not limited to the following (1) to (2).

### (1) Shaft parts 361

As shown in FIGS. 13 to 16, a pair of shaft parts 361, left and right, projects outward from two sides, left and right, of the head part 360. The shaft parts 361 are inserted into the shaft holes 351 of the lever 350, and are for supporting the lever 350 to be capable of rotation on the fastening device main body 340.

The shaft parts 361 were provided on the head part 360 (fastening device main body 340), and the shaft holes 351 were provided on the lever 351, but it is not limited to this. Conversely, the shaft holes may be provided on the head part 360 (fastening device main body 340), and the shaft parts may be provided on the lever 350.

### (2) Step part 362 (one example of provisional fastening means)

As shown in FIG. 11, the step part 362 is for the elastic claw 322 of the fixing device body 320 to be elastically inserted when in a state in which a leg part 370 to be described is inserted into the connect-through hole 321 of the fixing device body 320, that is, in the provisionally fastened state, and it functions as the aforementioned provisional fastening means together with the elastic claw 322.

Although one pair of a step part 362 and an elastic claw 322 was provided, a plurality of pairs also may be provided. Also, the step part 362 was provided on the head part 360 (fastening device main body 340), and the elastic claw 322 was provided on the fixing device body 320, but it is not limited to this, and conversely, the elastic claw may be provided on the head part 360 (fastening device main body 340), and the step part may be provided on the fixing device body 320.

### (Leg part 370)

As shown in FIGS. 11 to 13, the leg part 370 extends from the rear surface of the head part 360, and has an outer shape that is equal to or smaller than the inner shape of the connect-through hole 321 of the fixing device body 320.

As shown in FIGS. 11 to 13, the leg part 370 is provided with the following parts. The parts of the leg part 370 are not limited to the following (1).

### (1) Engaging sections 371

As shown in FIGS. 11 to 13, there is at least one pair of engaging sections 371 that are opposed at a distance from the rear surface of the installation panel 310, and project outward larger than the inner diameter of the pass-through hole 311 and with their backs toward each other, when in a state in which the leg part 370 (fastening device main body 340) was inserted through the connect-through hole 321 into the pass-through hole 311 of the installation panel 310.

### (Relationship between release stopping means and rotation restricting means)

As shown in FIG. 11 and FIG. 12, the release stopping means (rib 352) allow the release-stopped state of the provisional fastening means (elastic claws 322 and step parts 362) to be released when the rotation-restricted state by the rotation restricting means (contacted part 323 and elastic contact piece 353) is released and the lever 350 is rotated.

That is, when the lever 350 is rotated while pushing the operating projection 355 of the lever 350, as shown in FIG. 12, the catch-coupling projection 354 passes under the contacted part 323 of the fixing device body 320, and the rotation-restricted state of the rotation restricting means is released.

At the same time, when the lever is rotated 350, as shown in FIG. 12, the rib 352 rises and decouples from the elastic contact piece 353, and the release-stopped state of the release stopping means is released.

### (Method of installation of fastening device 330)

The method of installation of the fastening device 330 having the abovementioned constitution is next described.

First, as shown in FIG. 11, the fastening device 330 is provisionally fastened to the fixing device body 320.

Although the installation panel 310 was installed after provisionally fastening the fastening device 330 to the fixing device body 320, it is not limited to this, and the article fixing device 300 also may be provisionally fixed on the installation panel 310 by inserting fastening devices 330 in series when in a state in which each connect-through hole 321 of the fixing device body 320 was aligned with each pass-through hole 311 of the installation panel 310.

First, the leg parts 370 of the fastening device main bodies 340 are matched and inserted into the connect-through holes 321 of the fixing device body 320.

When the fastening device main body 340 is inserted, the pair of engaging sections 371 thereof is pressed to the inner surface of the connect-through hole 321 of the fixing device body 320 and is once drawn inward, and when the fastening device main body 340 is inserted further, as shown in FIG. 11, the engaging section is again restored at the place having passed through the connect-through hole 321.

Also, when the fastening device main body 340 is inserted, as shown in FIG. 11, the elastic claw 322 of the fixing device body 320 is inserted into the step part 362 of the fastening device main body 340, and it becomes in a provisionally fastened state.

At this time, the lever 350 is positioned in the non-rotating state, that is, on a straight line with the fastening device main body 340.

In the non-rotating state of the lever 350, the coupling projection 354 is in contact with the contacted part 323 of the fixing device body 320, whereby rotation of the lever 350 is blocked.

Also, at the same time, as shown in FIG. 11, the rib 352 of the lever 350 is in contact with the top surface of the elastic claw 322, whereby the elastic claw 322 is blocked from being bent upward and decoupling from the step part 362.

Next, as shown in FIG. 11, the front ends of the leg parts 370 of the fastening device main bodies 340, which project from the front surface of the fixing device body 320, are matched and inserted into the pass-through holes 311 of the installation panel 310.

When the leg part 370 is inserted, as shown in FIG. 11, the engaging sections 371 thereof are pressed to the inner surface of the pass-through hole 311 and are once drawn inward, and are restored on the rear surface side of the installation panel 310 after passing through the pass-through hole 311.

At this time, because the interval of opposition between the front surface of the fixing device body 320 and the engaging sections 371 of the fastening device 330 is set larger than the plate thickness of the installation panel 310, the article fixing device 300 becomes in a provisionally fixed state on the installation panel 310.

After that, in the case when fully fixing the article fixing device 300, the lever 350 should be rotated downward as shown in FIG. 12.

When rotating, the lever 350 is rotated while pushing the operating projection 355 thereof. When the lever 350 rotates, as shown in FIG. 12, the catch-coupling projection 354 passes under the contacted part 323 of the fixing device body 320, whereby the rotation-restricted state of the rotation restricting means is released.

At the same time, when the lever 350 is rotated, as shown in FIG. 12, the rib 352 rises and decouples from the elastic contact piece 353, and the release-stopped state of the release stopping means is released.

When the lever 350 is rotated, the leg part 370 of the fastening device 330 is retracted toward the direction of being pulled out from the pass-through hole 311 and the connect-through hole 321.

Therefore, the interval of opposition between the front surface of the fixing device body 320 and the engaging sections 371 of the fastening device 330 is narrowed, and the installation panel 310 is sandwiched within from above and below, whereby the article fixing device 300 is fixed on the installation panel 310 as shown in FIG. 12.

Also, during retraction of the leg part 370 of the fastening device 330, as shown in FIG. 12, the elastic claw 322 decouples from the step part 362, and rides up on the outer surface of the leg part 370.

The fixed state of the article fixing device 300 also can be unlocked by again rotating the lever 350 upward.

### (Fourth illustrative example)

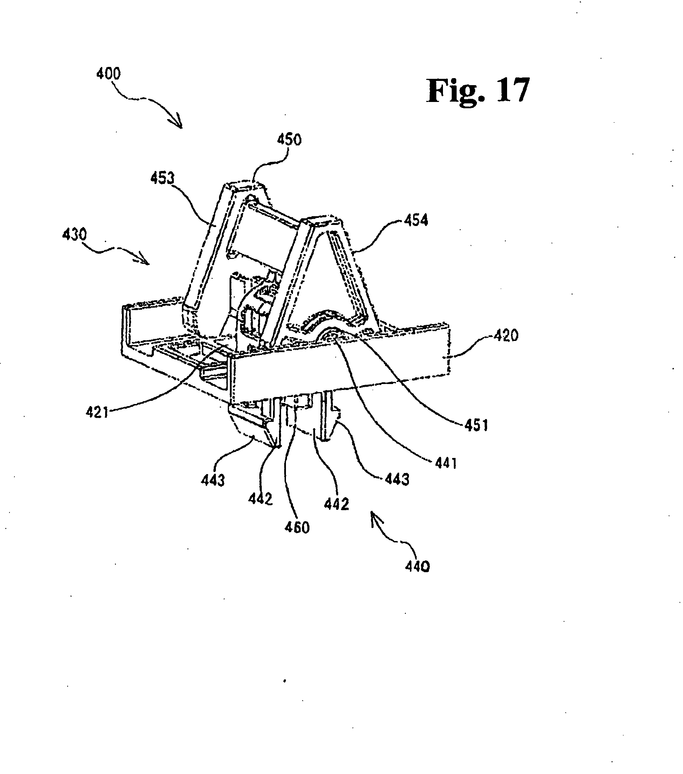

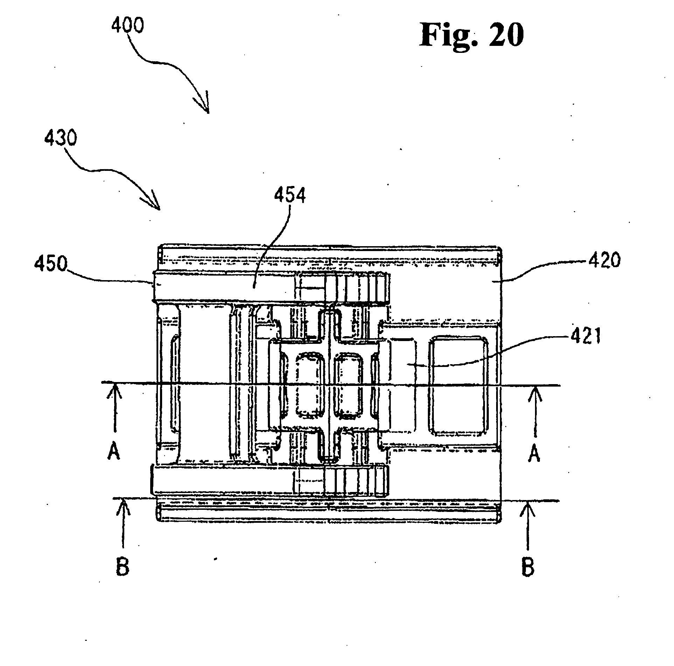

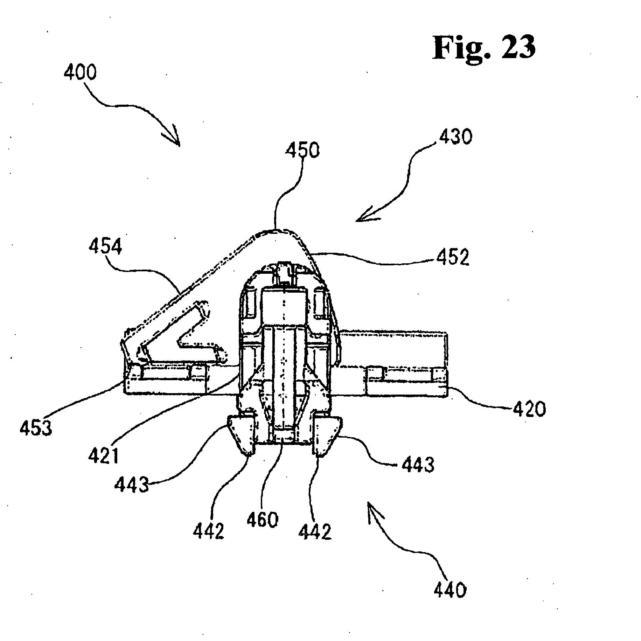

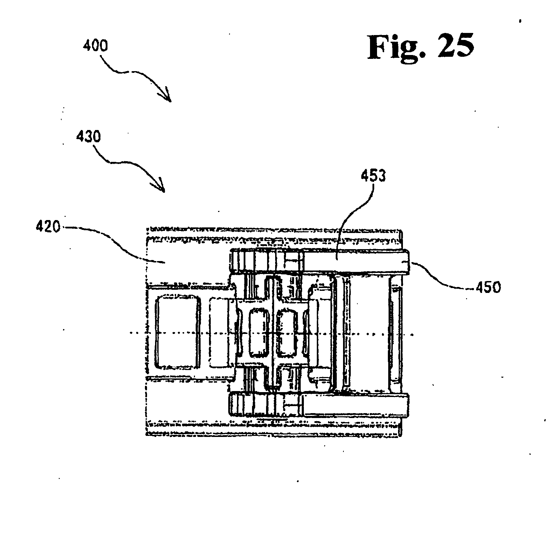

Next, a fourth illustrative example of a fastening device 430 is described using FIGS. 17 to 26.

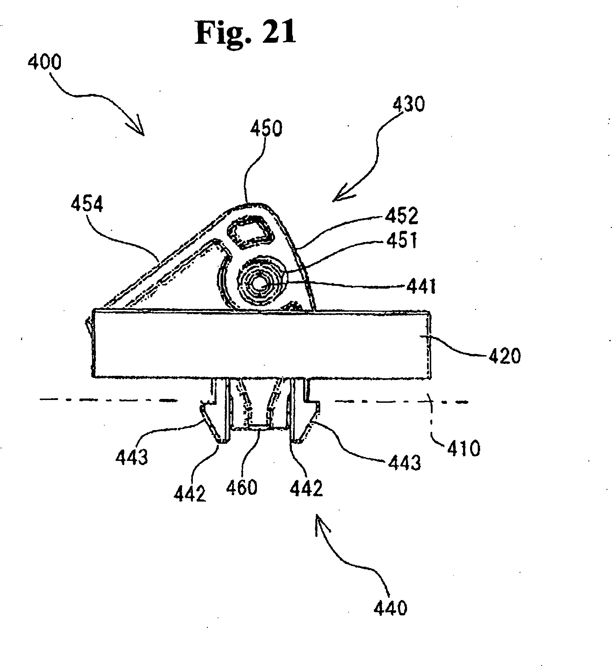

A characteristic of the present illustrative example is firstly that, as shown in FIGS. 21 to 26, articles can be installed on installation panels 410, 411 having different plate thicknesses by using a fastening device 430.

Secondly, a characteristic of the present illustrative example is that there are provided stopping means, that is, a stopping member 460, for preventing rattling or separating by bending of the leg part 442 when in the fixed state of the fastening device 430.

### (Article fixing device 400)

The article fixing device 400 according to the present illustrative example is for fixing a bumper or other article (not illustrated) into pass-through holes of body panels or other installation panels 410, 411.

Body panels were given as an example of installation panels 410, 411, but it is not limited to this. A bumper was given as an example of the article, but it is not limited to this.

Furthermore, the article fixing device 400 can be utilized widely in the following fields.
- in the field of interior furnishings of airplanes, for example, fastening of interior furnishings, and the like
- in the field of residential equipment, for example, fastening of interior furnishings (walls, bathtubs), provisional fastening of large-scale construction materials, and the like
- in the field of apparel, for example, buckles, and the like
- in the field of plants, for example, fastening of interior furnishings, and the like
- in the field of railroads, for example, fastening of interior furnishings, and the like
- in the field of distribution, for example, locks of delivery boxes, and the like
- in other fields and uses.

Specifically, as shown in FIGS. 17 to 18, the article fixing device 400, broadly divided, has the following parts. The following (1) to (2) will be described.
(1) Fixing device body 420 (bumper retainer)
(2) Fastening device 430

The parts of the article fixing device 400 are not limited to the abovementioned (1) to (2).

### (Installation panels 410, 411)

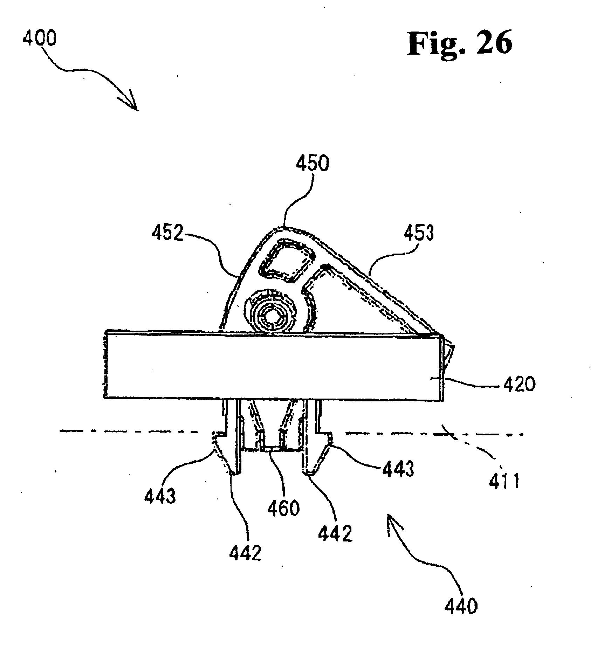

As shown in FIG. 21 and FIG. 26, there is a plurality, for example, two, of installation panels 410, 411 that have different plate thicknesses.

Of the two installation panels 410, 411, one, a first installation panel 410, is set to a thick plate thickness, for example 3.5 mm, as shown in FIG. 21. The other, a second installation panel 411, is set to a comparatively thin plate thickness, for example 2.5 mm, as shown in FIG. 26.

Although it is not illustrated, a square pass-through hole that passes through from front to rear surfaces is formed respectively on the first and second installation panels 410, 411.

The shape of the pass-through hole is not limited to square, and it also may be circular, oblong, elliptical, polygonal, or the like.

### (Fixing device body 420 (bumper retainer))

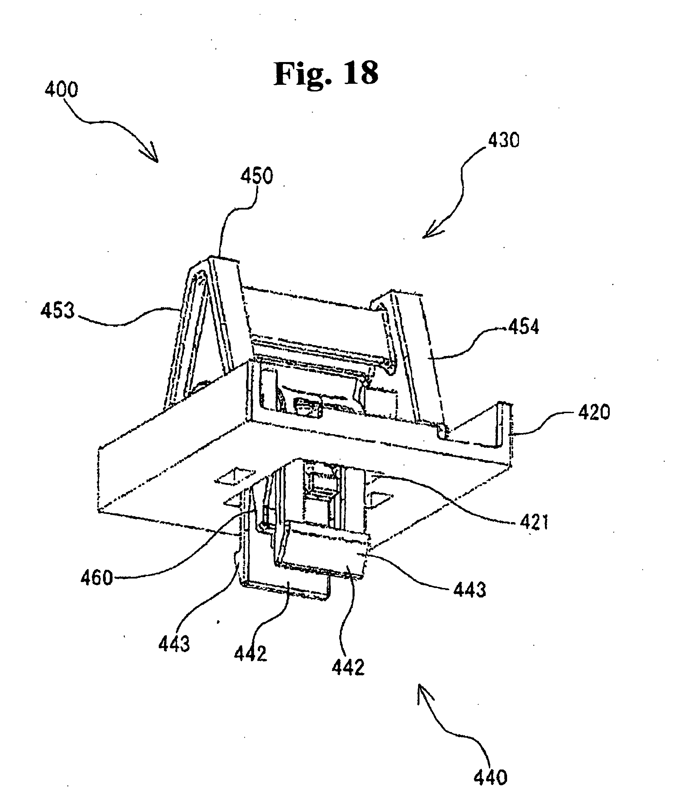

The fixing device body 420, for example, is a bumper retainer, and as shown in FIG. 18, it has a connect-through hole 421 that connects through with the pass-through hole that passes through the first or second installation panel 410, 411 from front to rear surfaces.

A bumper retainer was given as an example of the fixing device body 420, but it is not limited to this.

As shown in FIG. 18, the connect-through hole 421 connects through with the pass-through hole of the first or second installation panel 410, 411, which passes through the first or second installation panel 410, 411 from front to rear surfaces.

### (Fastening device 430)

As shown in FIG. 18, FIG. 21, and FIG. 26, the fastening device 430 is inserted through the connect-through hole 421 of the fixing device body 420 into the pass-through hole of the first or second installation panel 410, 411.

Specifically, as shown in FIG. 17 and FIG. 18, the fastening device 430, broadly divided, has the following parts. The following (1) to (3) will be described.
(1) Fastening device main body 440
(2) Lever 450
(3) Stopping member 460 (stopping means)

The parts of the fastening device 430 are not limited to the abovementioned (1) to (3).

### (Fastening device main body 440)

As shown in FIG. 18, FIG. 21, and FIG. 26, the fastening device main body 440 is clip-shaped, and is inserted through the connect-through hole 421 of the fixing device body 420 into the pass-through hole of the first or second installation panel 410, 411.

Specifically, as shown in FIGS. 17 to 23, the fastening device main body 440 is provided with each of the following parts.

The respective parts of the fastening device main body 440 are not limited to the abovementioned (1) to (3).

### (1) Rotating shafts 441

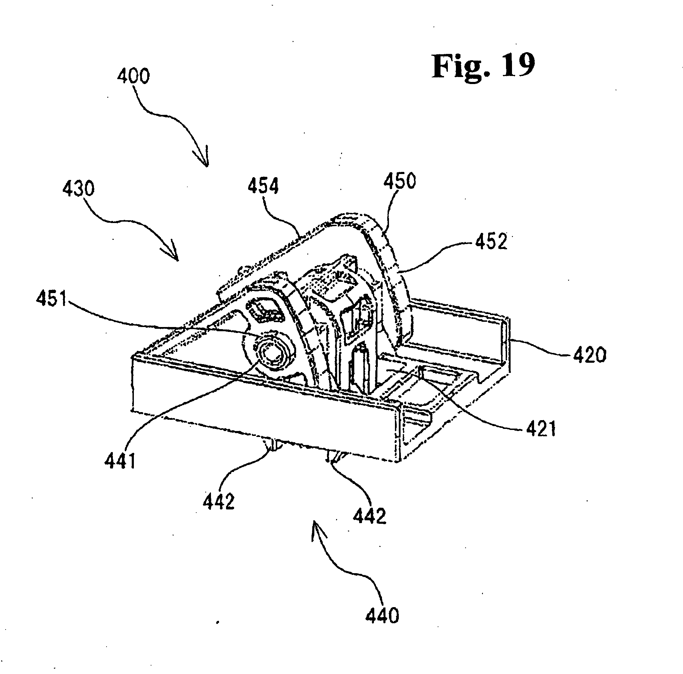

As shown in FIGS. 19 to 22, a pair of rotating shafts is positioned at the upper end in the same drawings, and projects with their backs toward each other. The pair of rotating shafts 441 is inserted respectively into shaft holes 451 of a lever 450 to be described.

### (2) Leg part 442

Although it is not illustrated, the leg part 442 is bifurcated from the upper end having the rotating shafts 441, and projects downward as a pair as shown in FIG. 17, FIG. 18, and FIGS. 21 to 23. The pair of leg parts 442 projects downward through the connect-through hole 421 of the fixing device body 420.

### (3) Engaging sections 443

As shown in FIG. 17, FIG. 18, and FIGS. 21 to 23, the engaging sections 443 project outward in a saw tooth form in section with their backs toward each other from the outside surfaces of the pair of leg parts 442. The maximum outer diameter of the pair of engaging sections 443 is set larger than the inner diameter of the pass-through hole.

### (Lever 450)

As shown in FIG. 17 and FIG. 18, the lever 450 is fixed by a shaft to the fastening device 430, and is for rotating so that the fastening device 430 is moved toward the direction of being retracted from the pass-through hole, and the engaging sections 443 to be described are brought into contact with the rear surface of the first or second installation panel 410, 411.

Specifically, the lever 450 is formed as an isosceles triangle in plan view, and is fixed by a shaft to be capable of rotating toward the left and right directions on the rotating shafts 441 of the fastening device main body 440 as shown in FIG. 21 and FIG. 26.

As shown in FIG. 17 and FIG. 18, the lever 450 is provided with each of the following parts. The respective parts of the lever 450 are not limited to the following (1) to (4).

### (1) Shaft holes 451

As shown in FIGS. 17 to 26, the shaft hole 451 is for supporting shaft parts 441 of the fastening device main body 440, to be described, so as to be capable of rotation.

### (2) First cam surface 452

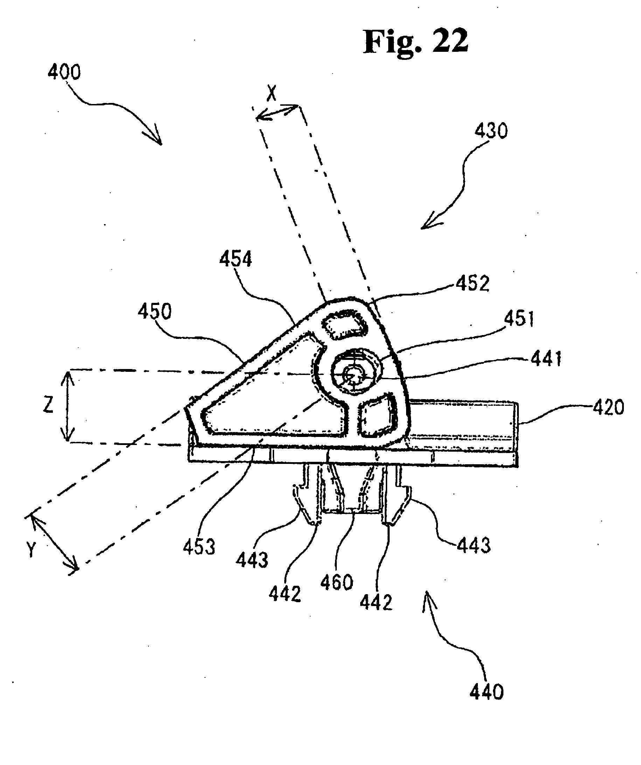

The first cam surface 452 contacts with the upper surface of the bottom wall of the fastening device main body 440 when in a state in which the shaft holes 451 are fitted with the rotating shafts 441 of the fastening device main body 440. As shown in FIG. 22, the first cam surface 452 is positioned on the base side of the isosceles triangle-shaped lever 450, and is positioned at a distance X from the rotating shafts of 441 of the fastening device main body 440 that are fitted into the shaft holes 451.

When in the position in which the first cam surface 452 is in contact with the upper surface of the bottom wall of the fastening device main body 440, as shown in FIG. 17 and FIG. 18, the pair of leg parts 442 projects farthest from the connect-through hole 421 of the fixing device body 420.

### (3) Second cam surface 453

As shown in FIG. 22, the second cam surface 453 contacts with the upper surface of the bottom wall of the fastening device main body 440 when in a state in which the lever 450 was turned down toward the left. The second cam surface 453 is positioned on one of the two equal sides of the isosceles triangle-shaped lever 450, and is positioned at a distance Y from the rotating shafts of 441 of the fastening device main body 440 that are fitted into the shaft holes 451. The distance Y is set longer than the distance X (Y > X).

When in the position in which the second cam surface 453 is in contact with the upper surface of the bottom wall of the fastening device main body 440, as shown in FIG. 21, the pair of leg parts 442 retracts, that is, ascends through the connect-through hole 421 of the fixing device body 420.
When the pair of leg parts 442 ascends, the engaging sections 443 that project in a saw tooth form in section contact with the rear surface (lower surface) of the first installation panel 410 that has a comparatively thick plate thickness.

### (4) Third cam surface 454

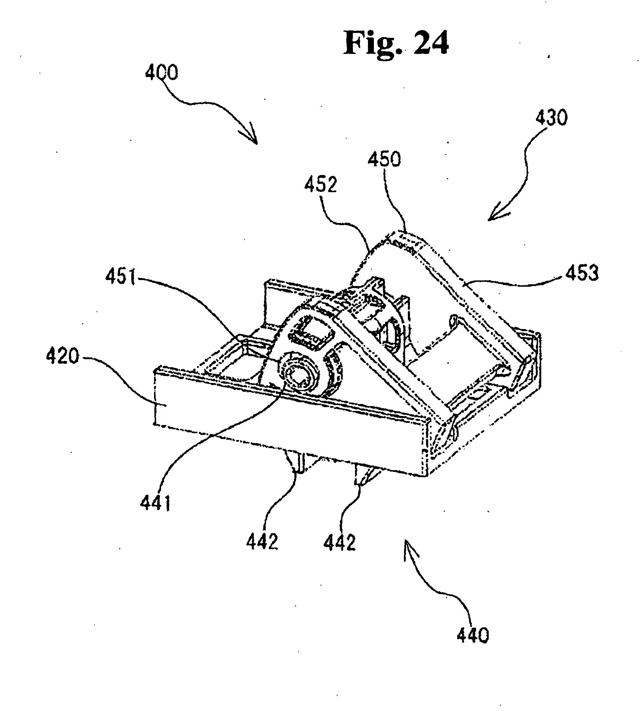

As shown in FIG. 24, the third cam surface 454 contacts with the upper surface of the bottom wall of the fastening device main body 440 when in a state in which the lever 450 was turned down toward the right. As shown in FIG. 22, the third cam surface 454 is positioned on the other of the two equal sides of the isosceles triangle-shaped lever 450, and is positioned at a distance Z from the rotating shafts of 441 of the fastening device main body 440 that are fitted into the shaft holes 451. The distance Z is set longer than the distance X and the distance Y (Z > Y > X).

When in the position in which the third cam surface 454 is in contact with the upper surface of the bottom wall of the fastening device main body 440, as shown in FIG. 26, the pair of leg parts 442 retracts, that is, ascends through the connect-through hole 421 of the fixing device body 420. When the pair of leg parts 442 ascends, the engaging sections 443 that project in a saw tooth form in section contact with the rear surface (lower surface) of the second installation panel 411 that has a comparatively thin plate thickness.

### (Stopping member 460 (stopping means))

As shown in FIG. 21 and FIG. 26, the stopping member 460 is for stopping elastic contraction in diameter of the engaging sections 443 after the fastening device 430 was moved toward the direction of being retracted from the pass-through hole, and it constitutes stopping means.

Specifically, as shown in FIG. 17, FIG. 18, FIG. 21, and FIG. 26, the stopping member 460 is formed as a plate, and is positioned inside the space between the pair of leg parts 442. The height of the stopping member 460 is set to about one half of the height of the leg parts 442, and the amount of projection from the lower surface of the bottom wall of the fastening device main body 440 is set to be constant.

As opposed to this, the leg parts 442 ascend by rotation of the lever 450. When the leg parts 442 ascend by rotation of the lever 450, as shown in FIG. 21 and FIG. 26, the stopping member 460 is positioned toward the side of the back surfaces of the engaging sections 443, whereby it is made such that the pair of leg parts 442 are not bent toward the direction of approaching each other.

The stopping member 460 was given as an example of the stopping means, but it is not limited to this.

### (Method of installation of fastening device 430)

The method of installation of the fastening device 400 having the abovementioned constitution is next described.

First, the front ends of the leg parts 442 of the fastening device main body 440 are matched and inserted into the pass-through hole of first or second installation panel 410, 411.

For example, as shown in FIG. 21, when the leg parts 442 are inserted into the pass-through hole of the first installation panel 410 that has a comparatively thick plate thickness, the engaging sections 443 thereof are pressed to the inner surface of the pass-through hole and are once drawn inward, and are restored on the bottom surface side of the first installation panel 410 after passing through the pass-through hole.

At this time, because the interval of opposition between the lower surface of the bottom wall of the fixing device body 420 and the engaging sections 443 of the fastening device 430 is set larger than the plate thickness of the first or second installation panel 410, 411, the article fixing device 400 becomes in a provisionally fixed state on the first installation panel 410.

After that, in the case when fully fixing the article fixing device 400, the lever 450 should be rotated toward the left as shown in FIG. 21.

When the lever 450 is rotated toward the left, as shown in FIG. 21, the pair of leg parts 442 of the fastening device 430 retracts, that is, ascends toward the direction of being pulled out from the pass-through hole and the connect-through hole 421.

Therefore, the interval of opposition between lower surface of the bottom wall of the fixing device body 420 and the engaging sections 443 of the leg parts 442 is narrowed, and the first installation panel 410 is sandwiched within from front and rear surfaces, whereby the article fixing device 400 is fixed on the first installation panel 410 as shown in FIG. 21.

Also, at this time, as shown in FIG. 21, the stopping member 460 is positioned toward the side of the back surfaces of the engaging sections 443 of the leg parts 442. Therefore, the pair of leg parts 442 contacts with the stopping member 460, whereby they are no longer bent toward the direction of approaching each other, and they are made solid, as is said, whereby the leg parts 442 can no longer be pulled out from the pass-through hole of the first installation panel 410.

That is, because the first installation panel 410 is made solid, as long as the engaging sections 443 are not subjected to shear, there is no worry that the retaining strength by the engaging sections 443 might degrade.

When the lever 450 is again rotated upward, the leg parts 442 ascend, and because the stopping member 460 is no longer positioned toward the side of the back surfaces of the engaging sections 443 of the leg parts 442, the pair of leg parts 442 can now be bent toward the direction of approaching each other, and it becomes possible to pull out the leg parts 442 from the pass-through hole of the first installation panel 410.

Meanwhile, as shown in FIG. 26, when the leg parts 442 are inserted into the pass-through hole of the second installation panel 411 that has a comparatively thin plate thickness, and the lever 450 is rotated toward the right, the pair of leg parts 442 of the fastening device 430 retracts, that is, ascends toward the direction of being pulled out from the pass-through hole and the connect-through hole 421.

Therefore, the interval of opposition between lower surface of the bottom wall of the fixing device body 420 and the engaging sections 443 of the leg parts 442 is narrowed, and the second installation panel 411 is sandwiched within from front and rear surfaces, whereby the article fixing device 400 is fixed on the second installation panel 411 as shown in FIG. 26.

Also, at this time, as shown in FIG. 26, the stopping member 460 is positioned toward the side of the back surface of the engaging sections 443 of the leg parts 442. Therefore, the pair of leg parts 442 contacts with the stopping member 460, whereby they are no longer bent toward the direction of approaching each other, and it is made solid, as is said, whereby the leg parts 442 can no longer be pulled out from the pass-through hole of the second installation panel 411.

### (Fifth illustrative example)

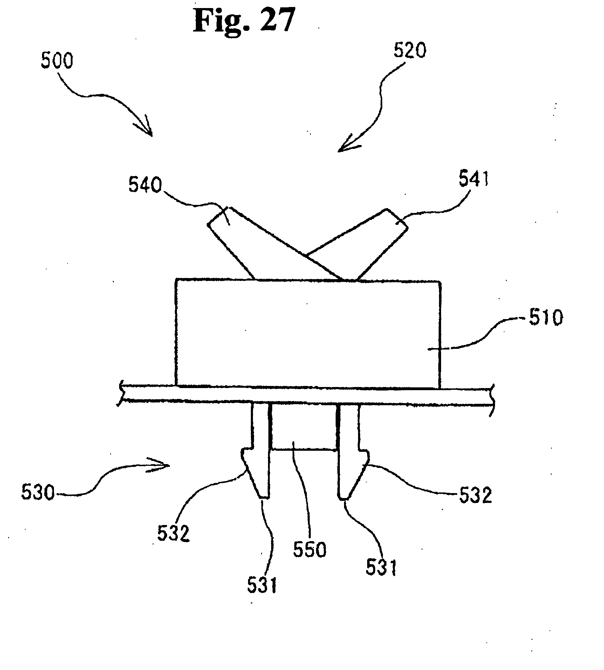

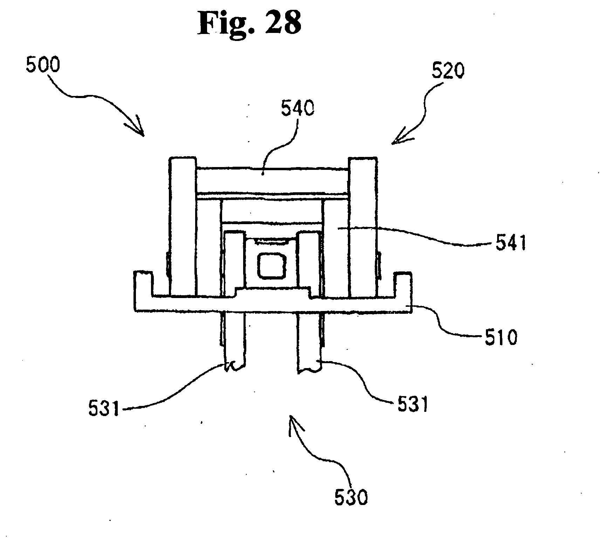

Next, a fifth illustrative example of a fastening device 520 is described using FIG. 27 and FIG. 28.

A characteristic of the present illustrative example is that, as shown in FIG. 27 and FIG. 28, a plurality, for example, two, of levers 540, 541 is used.

That is, as shown in FIG. 27 and FIG. 28, the article fixing device 500 of the present illustrative example, broadly divided, is constituted by a fixing device body 510 and a fastening device 520.

The fastening device 520 is provided with a fastening device main body 530, levers 540, 541, and a stopping member 550 (stopping means).

The fastening device main body 530 is provided with a pair of leg parts 531, and an engaging section 532 on each leg part 531.

There is a plurality, for example, two, of levers 540, 541, and they are constituted by a first lever 540 that is supported to be capable of rotation on the fastening device main body 530, and a second lever 541 that is positioned inside of the first lever 540, and is supported to be capable of rotating independently from the first lever 540.

When the outer first lever 540 is rotated, the leg part 531 ascends, and although it is not illustrated, it conforms to a first installation panel that has a prescribed plate thickness. Also, when the inner second lever 541 is rotated, the leg part 531 ascends, and although it is not illustrated, it conforms to a second installation panel that has a different plate thickness from the first installation panel.

The stopping member 550 (stopping means) is positioned inside the space between the pair of leg parts 531.

According to the present illustrative example, it can be used for installation panels that have different plate thicknesses in the same manner as when one lever 450 was used in the fourth illustrative example that was previously described using FIGS. 17 to 26.

Also, because the amount that the leg parts 531 are caused to ascend is changed according to respective directions of rotation of the two levers 540, 541 of the present embodiment, it can also be made to conform to four kinds of installation panels that have different plate thicknesses. That is, it can be constituted such that when the outer first lever 540 is rotated toward the left, it is made to conform to a first plate thickness, and conversely, when it is rotated toward the right, it is made to conform to a second plate thickness that is different from the first plate thickness. Likewise, it can be constituted such that when the inner second lever 541 is rotated toward the left, it is made to conform to a third plate thickness that is different from the first and second plate thicknesses, and conversely, when it is rotated toward the right, it is made to conform to a fourth plate thickness that is different from the first to third plate thicknesses.

### (Sixth illustrative example)

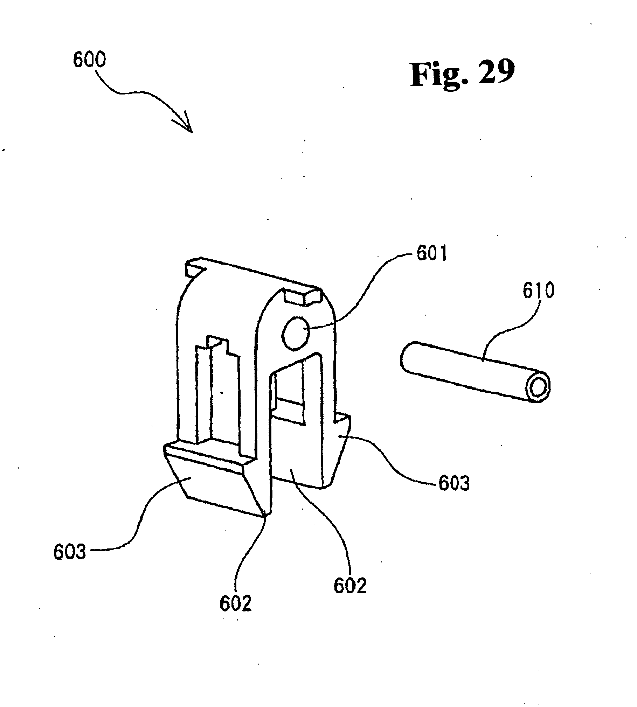

Next, a sixth illustrative example of a fastening device main body 600 is described using FIG. 29.

A characteristic of the present illustrative example, as shown in FIG. 29, is that a soft resin is used for the fastening device main body 600.

That is, as shown in FIG. 29, the fastening device main body 600 is formed in a roughly U-shape that is open downward, it has a shaft hole 601, leg parts 602, and engaging sections 603, and it is molded with soft resin.

A pin 610 that is inserted into the shaft hole 601 of the fastening device main body 600 is molded with hard resin. The pin 610 is made of hard resin because the pin 610 is subject to stress. The pin 610 is inserted into the shaft hole 601 of the fastening device main body 600.

Although the pin 610 was molded with hard resin, it is not limited to this, and it also may be made of metal.

The fastening device main body 600 of the present illustrative example is used being installed in the fastening device 430 of the fourth illustrative example that was previously described using FIGS. 17 to 26.

Because soft resin is used for the fastening device main body 600, although it is not illustrated, it can be installed even in the case of great scattering of plate thickness of installation panels. Also, because soft resin is used for the fastening device main body 600, the noise from rattling during installation or after installation on the installation panel can be reduced.

After installation, the stopping member 460 of the fourth illustrative example that was described using FIGS. 17 to 26 is positioned inside the space between the leg parts 602, whereby the leg parts 602 can be made solid, as is said.

## Claims

1. An article fixing device (10, 400) for fixing an article to an installation panel (20, 310, 410, 411), comprising:
a fixing device body (30, 320, 420) having a connect-through hole (31, 321, 421) passing into a pass-through hole (21, 311) connecting front and rear surfaces of said installation panel (20, 310, 410, 411);
a fastening device (40) inserted through said connect-through hole (31, 321, 421) of said fixing device body (30, 320, 420) into said pass-through hole (21,311) of said installation panel (20, 310, 410, 411);
wherein said fixing device body (30, 321, 420) comprises a contact surface extending outwardly from an inner diameter of said pass-through hole (21,311) and contacting with a front surface of said installation panel (20, 310, 410, 411); and
wherein said fastening device (40) comprises at least one pair of engaging sections (61, 121, 371,443, 532, 603), said engaging sections (61, 121, 371, 443, 532, 603), in a state in which each fastening device (40) passes through said connect-through hole (31, 321, 421) and said pass-through hole (21, 311), facing each other away from the rear surface of said installation panel (20, 130, 410, 411), being larger than an inner diameter of the pass-through hole (21, 311), and projecting outwards with backs against each other; and
a lever (70, 350, 450, 540, 541) being held rotatably by said fastening device (40), and moving said fastening device (40) in a direction retracting from said pass-through hole (21, 311) by rotation thereof, the lever(70, 350, 450, 540, 541) fixing said engaging section (61, 121, 371, 443, 532, 603) to said rear surface of said installation panel (20, 310, 410, 411), **characterized in that** a rotation restricting device (323, 353) for stopping unexpected rotation of said lever (70, 350, 450, 540, 541) is provided between said fixing device body (30, 320, 420) and said lever (70, 350, 450, 540, 541), said rotation restricting device (323, 353) comprising an elastic contact piece (353) and a contacted part (323) to be contacted by the elastic contact piece (353).

2. The article fixing device according to claim 1, wherein said engaging sections (61, 121, 371, 443, 532, 603) are matched and inserted into said pass-through hole (21, 311) from a front surface side toward a rear surface side of said installation panel (20, 310, 410, 411), the engaging sections (61, 121, 371, 443, 532, 603) being elastically contracted in a diameter direction when passing through the pass-through hole (21, 311) and restored by elastic restoring force after passing through.

3. The article fixing device according to claim 2, wherein said engaging section (61, 121, 371, 443, 532, 603) comprises:
a hinge part that is connected to said fastening device (40);
an inclined surface extending backwards with respect to a direction of insertion from said hinge part, and is inclined diagonally outward; and
an opposing surface turning back from a top of said inclined surface and inclining diagonally inward, and positioned at a distance from the rear surface of said installation panel (20, 310, 410, 411), the opposing surface contacting in parallel with a rear surface of said installation panel (20, 310, 410, 411) in a fixed state having been retracted by rotation of said lever (70, 350, 450, 540, 541).

4. The article fixing device according to any one of claims 1 to 3, further comprising a provisional fastening device provisionally fastening said fastening device in a state having been inserted into said connect-through hole (31, 321, 421), the provisional fastening device being provided between said fixing device body (30, 320, 420) and said fastening device (40), and released from a provisionally fastened state by rotation of said lever (70, 350, 450, 540, 541).

5. The article fixing device according to claim 4, wherein said provisional fastening device comprises:
at least one pair of elastic claws (322) provided on said fixing device body (30, 320, 420), and placed upright to face opposite to each other on a perimeter of said connect-through hole (31, 321, 421); and
step parts provided on said fastening device (40), each of said elastic claws (322) being elastically inserted into the step parts (362) respectively.

6. The article fixing device according to claim 4, wherein said lever (70, 350, 450, 540, 541) has a release stopping device (352) for stopping release of said provisional fastening device.

7. The article fixing device according to any of claims 1 to 6 wherein said fixing device body (30, 320, 420) is a bumper retainer for fixing an automobile bumper as said article to a body panel as said installation panel (20, 310, 410, 411).

8. The article fixing device according to any of claims 1 to 7, wherein
said elastic contact piece is provided on said lever (70, 350, 450, 540, 541); and
said contacted part is provided on said fixing device body (30, 320, 420), positioned within a rotational track of said elastic contact piece, and contacted by the elastic contact piece.

9. The article fixing device according to any of claims 6 to 8, wherein said release stopping device (352) is releasable from the release-stopped state of said provisional fastening device in rotating the lever (70, 350, 450, 540, 541) by releasing a rotation-restricted state by said rotation restricting device (323, 353).

## Patentansprüche

1. Artikelbefestigungsvorrichtung (10, 400) zum Befestigen eines Artikels an einer Installationstafel (20, 310, 410, 411), umfassend:
einen Befestigungsvorrichtungskörper (30, 320, 420) mit einem Verbindungsdurchbruch (31, 321, 421), welcher in einen Einsteckdurchbruch (21, 311) zum Verbinden der Front- und Rückflächen der Installationstafel (20, 310, 410, 411) führt;
eine Befestigungsvorrichtung (40), welche durch den Verbindungsdurchbruch (31, 321, 421) des Befestigungsvorrichtungskörpers (30, 320, 420) in den Einsteckdurchbruch (21, 311) der Installationstafel (20, 310, 410, 411) eingesetzt wird;
wobei der Befestigungsvorrichtungskörper (30, 321, 420) eine sich nach außen von einem inneren Durchmesser des Einsteckdurchbruchs (21, 311) erstreckende Kontaktoberfläche umfasst und mit der Frontfläche der Installationstafel (20, 310, 410, 411) in Kontakt steht; und
wobei die Befestigungsvorrichtung (40) zumindest ein Paar Eingreifabschnitte (61, 121, 371, 443, 532, 603) umfasst, wobei die Eingreifabschnitte (61, 121, 371, 443, 532, 603) in einem Zustand, in welchem jede Befestigungsvorrichtung (40) durch den Verbindungsdurchbruch (31, 321, 421) und den Einsteckdurchbruch (21, 311) eingesetzt sind, sich abgewandt von der Rückfläche der Installationstafel (20, 310, 410, 411) einander gegenüberstehen, größer als der innere Durchmesser des Einsteckdurchbruchs (21, 311) sind und nach außen vorspringen mit den Rücken gegeneinander; und
einen Hebel (70, 350, 450, 540, 541), welcher drehbar durch die Befestigungsvorrichtung (40) gehalten wird, und welcher die Befestigungsvorrichtung (40) in einer von dem Einsteckdurchbruch (21, 311) zurückziehenden Richtung durch dessen Drehung bewegt, wobei der Hebel (70, 350, 450, 540, 541) die Eingreifabschnitte (61, 121, 371, 443, 532, 603) an der Rückfläche der Installationstafel (20, 310, 410, 411) befestigt, **dadurch gekennzeichnet, dass** eine Drehbegrenzungsvorrichtung (323, 353) zum Stoppen einer unbeabsichtigten Drehung des Hebels (70, 350, 450, 540, 541) zwischen dem Befestigungsvorrichtungskörper (30, 320, 420) und dem Hebel (70, 350, 450, 540, 541) vorgesehen ist, wobei die Drehungsbegrenzungsvorrichtung (323, 353) ein elastisches Kontaktstück (353) und ein kontaktiertes Teil (322) zum Kontaktieren durch das elastische Kontaktstück (353) umfasst.

2. Artikelbefestigungsvorrichtung nach Anspruch 1, wobei die Eingreifabschnitte (61, 121, 371, 443, 532, 603) zueinander passend sind und in den Einsteckdurchbruch (21, 311) von einer Frontflächenseite zu einer Rückflächenseite der Installationstafel (20, 310, 410, 411) eingesetzt werden, wobei die Eingreifabschnitte (61, 121, 371, 443, 532, 603) beim Einsetzen durch den Einsteckdurchbruch (21, 311) elastisch in einer Durchmesserrichtung zusammengezogen werden und wiederhergestellt werden durch eine elastische Rückstellkraft nach dem Einsetzen.

3. Artikelbefestigungsvorrichtung nach Anspruch 2, wobei der Eingreifabschnitt (61, 121, 371, 443, 532, 603) umfasst:
ein Scharnierteil, welches mit der Befestigungsvorrichtung (40) verbunden ist;
eine Schrägfläche, welche bezogen auf eine Einsetzrichtung des Scharnierteils nach hinten weg steht, und welche diagonal nach außen geneigt ist; und
eine gegenüberliegende Fläche, welche von einer Spitze der Schrägfläche nach hinten gedreht und diagonal nach innen geneigt ist, und welche in einem Abstand von einer Rückfläche der Installationstafel (20, 310, 410, 411) angeordnet ist, wobei die gegenüberliegende Oberfläche mit der Rückfläche der Installationstafel (20, 310, 410, 411) parallel in Kontakt steht in einem befestigten Zustand, indem sie durch Drehung des Hebels (70, 350, 450, 540, 541) zurückgezogen ist.

4. Artikelbefestigungsvorrichtung nach einem der Ansprüche 1 bis 3, weiterhin umfassend eine provisorische Befestigungsvorrichtung, welche die Befestigungsvorrichtung in einem durch den Verbindungsdurchbruch (31, 321, 421) eingesetzten Zustand befestigt, wobei die provisorische Befestigungsvorrichtung zwischen dem Befestigungsvorrichtungskörper (30, 320, 420) und der Befestigungsvorrichtung (40) vorgesehen ist, und von einem provisorischen Befestigungszustand durch Drehung des Hebels (70, 350, 450, 540, 541) gelöst wird.

5. Artikelbefestigungsvorrichtung nach Anspruch 4, wobei die provisorische Befestigungsvorrichtung umfasst:
zumindest ein Paar elastische Krallen (322), welche auf dem Befestigungsvorrichtungskörper (30, 320, 420) vorgesehen sind, und aufrecht angeordnet sind, um sich einander auf einem Umfang des Verbindungsdurchbruchs (31, 321, 421) gegenüberzuliegen; und
Stufenteile, welche auf der Befestigungsvorrichtung (40) vorgesehen sind, wobei jede der elastischen Krallen (322) in die Stufenteile (362) jeweils elastisch eingesetzt werden.

6. Artikelbefestigungsvorrichtung nach Anspruch 4, wobei der Hebel (70, 350, 450, 540, 541) eine Lösestoppvorrichtung (352) zum Stoppen des Lösens der provisorischen Befestigungsvorrichtung hat.

7. Artikelbefestigungsvorrichtung nach einem der Ansprüche 1 bis 6, wobei der Befestigungsvorrichtungskörper (30, 320, 420) eine Stoßstangenhalterung zum Befestigen einer Automobilstoßstange als Artikel an einem Karosserieteil als Installationstafel (20, 310, 410, 411) ist.

8. Artikelbefestigungsvorrichtung nach einem der Ansprüche 1 bis 7, wobei
das elastische Kontaktteil auf dem Hebel (70, 350, 450, 540, 541) vorgesehen ist; und
das kontaktierte Teil auf dem Befestigungsvorrichtungskörper (30, 320, 420) vorgesehen ist, welches innerhalb des Drehwegs des elastischen Kontaktstücks angeordnet und mit dem elastischen Kontaktstück in Kontakt ist.

9. Artikelbefestigungsvorrichtung nach einem der Ansprüche 6 bis 8, wobei die Lösestoppvorrichtung (352) lösbar vom Lösestoppzustand der provisorischen Befestigungsvorrichtung durch Drehung des Hebels (70, 350, 450, 540, 541) durch Lösen eines drehbeschränkten Zustands durch die Drehungsbegrenzungsvorrichtung (323, 353) ist.

## Revendications

1. Dispositif de fixation d'un article (10, 400) destiné à fixer un article à un panneau de montage (20, 310, 410, 411), comprenant:
un corps du dispositif de fixation (30, 320, 420) présentant un trou traversant de connexion (31, 321, 421) passant dans un trou traversant de passage (21, 311) reliant des surfaces avant et arrière dudit panneau de montage (20, 310, 410, 411);
un dispositif de serrage (40) introduit à travers ledit trou traversant de connexion (31, 321, 421) dudit corps du dispositif de fixation (30, 320, 420) dans ledit trou traversant de passage (21, 311) dudit panneau de montage (20, 310, 410, 411);
en ce que ledit corps du dispositif de fixation (30, 321, 420) comprend une surface de contact s'étendant vers l'extérieur à partir d'un diamètre intérieur dudit trou traversant de passage (21, 311) et étant en contact avec une surface avant dudit panneau de montage (20, 310, 410, 411); et
en ce que ledit dispositif de serrage (40) comprend au moins une paire de sections de prise (61, 121, 371, 443, 532, 603), lesdites sections de prise (61, 121, 371, 443, 532, 603), dans un état dans lequel chaque dispositif de serrage (40) passe à travers ledit trou traversant de connexion (31, 321, 421) et ledit trou traversant de passage (21, 311), face à face à une distance de la surface arrière dudit panneau de montage (20, 130, 410, 411), étant plus grand qu'un diamètre intérieur du trou traversant de passage (21,311), et faisant saillie vers l'extérieur, faces arrière les unes contre les autres; et
un levier (70, 350, 450, 540, 541) étant maintenu en rotation par ledit dispositif de serrage (40), et déplaçant ledit dispositif de serrage (40) dans une direction permettant la rétraction dudit trou traversant de passage (21, 311) par rotation de ce dernier, le levier (70, 350, 450, 540, 541) fixant ladite section en prise (61, 121, 371, 443, 532, 603) à ladite surface arrière dudit panneau de montage (20, 310, 410, 411), **caractérisé en ce qu'**un dispositif limiteur de rotation (323, 353) pour arrêter une rotation inattendue dudit levier (70, 350, 450, 540, 541) est prévu entre ledit corps du dispositif de fixation (30, 320, 420) et ledit levier (70, 350, 450, 540, 541), ledit dispositif limiteur de rotation (323, 353) comprenant une pièce de contact élastique (353) et une partie en contact (323) pour une mise en contact par la pièce de contact élastique (353).

2. Dispositif de fixation d'un article selon la revendication 1, en ce que lesdites sections en prise (61, 121, 371, 443, 532, 603) sont adaptées et insérées dans ledit trou traversant de passage (21, 311) à partir d'un côté de surface avant vers un côté de surface arrière dudit panneau de montage (20, 310, 410, 411), les sections en prise (61, 121, 371, 443, 532, 603) étant contractées de manière élastique dans un sens diamétral lors du passage à travers le trou traversant de passage (21, 311) et rappelées par une force de rappel élastique après passage.

3. Dispositif de fixation d'un article selon la revendication 2, en ce que ladite section en prise (61, 121, 371, 443, 532, 603) comprend:
un élément d'articulation qui est relié audit dispositif de serrage (40);
une surface inclinée s'étendant vers l'arrière par rapport à un sens d'insertion à partir dudit élément d'articulation, et qui est inclinée diagonalement vers l'extérieur; et
une surface opposée tournée vers l'arrière à partir d'une partie supérieure de ladite surface inclinée et s'inclinant diagonalement vers l'intérieur, et positionnée à une distance de la surface arrière dudit panneau de montage (20, 310, 410, 411), la surface opposée étant en contact parallèlement à une surface arrière dudit panneau de montage (20, 310, 410, 411) dans un état fixé ayant été rétracté par rotation dudit levier (70, 350, 450, 540, 541).

4. Dispositif de fixation d'un article selon l'une des revendications 1 à 3, comprenant en outre un dispositif de serrage provisoire serrant provisoirement ledit dispositif de serrage dans un état ayant été inséré dans ledit trou traversant de connexion (31, 321, 421), le dispositif de serrage provisoire étant prévu entre ledit corps du dispositif de fixation (30, 320, 420) et ledit dispositif de serrage (40), et dégagé d'un état provisoirement serré par rotation dudit levier (70, 350, 450, 540, 541).

5. Dispositif de fixation d'un article selon la revendication 4, en ce que ledit dispositif de serrage provisoire comprend:
au moins une paire de griffes élastiques (322) prévue sur ledit corps du dispositif de fixation (30, 320, 420), et placée à la verticale pour être opposée l'une par rapport à l'autre sur un périmètre dudit trou traversant de connexion (31, 321, 421) ; et
des parties étagées prévues sur ledit dispositif de serrage (40), chacune desdites griffes élastiques (322) étant insérée de manière élastique respectivement dans les parties étagées (362).

6. Dispositif de fixation d'un article selon la revendication 4, en ce que ledit levier (70, 350, 450, 540, 541) comporte un dispositif d'arrêt de dégagement (352) pour arrêter le dégagement dudit dispositif de fixation provisoire.

7. Dispositif de fixation d'un article selon l'une des revendications 1 à 6, en ce que ledit corps du dispositif de fixation (30, 320, 420) est un dispositif de retenue de pare-chocs destiné à fixer un pare-chocs d'automobile, comme étant ledit article, à un panneau de carrosserie, comme étant ledit panneau de montage (20, 310, 410, 411).

8. Dispositif de fixation d'un article selon l'une des revendications 1 à 7, en ce que ladite pièce de contact élastique est prévue sur ledit levier (70, 350, 450, 540, 541); et
ladite partie en contact est prévue sur ledit corps du dispositif de fixation (30, 320, 420), positionnée à l'intérieur d'un guidage en rotation de ladite pièce de contact élastique, et mise en contact par la pièce de contact élastique.

9. Dispositif de fixation d'un article selon l'une des revendications 6 à 8, en ce que ledit dispositif d'arrêt de dégagement (352) peut être dégagé de l'état arrêt-dégagement dudit dispositif de serrage provisoire en faisant tourner le levier (70, 350, 450, 540, 541) par dégagement d'un état limitant la rotation dudit dispositif limiteur de rotation (323, 353).
